# EUROPÄISCHE PATENTSCHRIFT

(11) **EP 3 575 068 B1**
(45) Veröffentlichungstag und Bekanntmachung des Hinweises auf die Patenterteilung: **03.03.2021**
(21) Anmeldenummer: 19176776.3
(22) Anmeldetag: 27.05.2019
(51) Int. Cl.: B29C 65/20, E06B 3/96, B29K 101/12, B29K 27/06

(54) **VORRICHTUNG UND VERFAHREN ZUM VERBINDEN VON PROFILTEILEN**
DEVICE AND METHOD FOR CONNECTING PROFILED PARTS
DISPOSITIF ET PROCÉDÉ DE RACCORDEMENT DE PIÈCES PROFILÉES

(30) Priorität: 28.05.2018 DE 102018112747
(43) Veröffentlichungstag der Anmeldung: 04.12.2019
(73) Patentinhaber: Rotox Besitz- und Verwaltungsgesellschaft mbH, 65611 Brechen (DE)
(72) Erfinder:
(74) Vertreter: Müller, Eckhard

(56) Entgegenhaltungen:
- EP-A1- 3 409 449
- WO-A1-2017/157914
- DE-A1-102016 104 785

## Beschreibung

Die Erfindung betrifft eine Vorrichtung zum Verbinden zweier Profilteile aus Kunststoff.

Zudem betrifft die Erfindung ein Verfahren zum Verbinden von Profilteilen aus Kunststoff.

Vorrichtungen und Verfahren der eingangs genannten Art werden insbesondere zum Verschweißen von PVC-Profilstäben zu Fensterrahmen oder Türrahmen verwendet. Dazu werden die Profilstäbe vor dem Verschweißen auf die jeweils erforderliche Länge abgelängt und, sofern erforderlich, auf Gehrung geschnitten, um die Profilteile anschließend an den Schnittflächen, also an den Gehrungsschnittflächen durch Verschweißen zu verbinden. Neben dem Verschweißen von winkligen Eckverbindungen, wobei die Profilstäbe auf Gehrung zugeschnitten sind, gibt es stumpfe Schweißverbindungen (180°). Hierbei ändert sich die Geometrie des Profilteils an einem Profilstab.

Das eigentliche Verschweißen der Profilteile erfolgt durch Anschmelzen und anschließendes Fügen der Verbindungsflächen an den Profilstabenden. Hierzu werden die zu verschweißenden Profilteile zunächst in eine entsprechende Vorrichtung eingelegt und mit Hilfe von Anschlägen und Führungen positioniert. Daraufhin werden die Verbindungsflächen für den sogenannten Angleich- und Anwärmprozess in einer Fügerichtung gegen die Heizfläche des Heizelementes gedrückt, wobei Material an der Verbindungsfläche, also im Schweißbereich geschmolzen wird. Nach dem Erwärmen folgt das Umstellen und Fügen, wobei das Heizelement zwischen den Profilteilen entfernt wird. Abschließend werden die Profilteile mit den angeschmolzenen Verbindungsflächen, also dem angeschmolzenen Schweißbereich in Fügerichtung aufeinander zubewegt, also gegeneinander gepresst, wobei sich der noch heiße, thermoplastische Werkstoff der beiden Profilstabenden derart verbindet, dass eine stabile Schweißverbindung entsteht. Ein solches Vorgehen ist zum Beispiel einleitend in der DE 10 2012 112 533 A1 erwähnt.

In der DE 10 2012 112 533 A1 finden auch Parallelschub- und Diagonalschubverfahren Erwähnung. Bei dem Parallelschubverfahren bewegen sich die anzuschmelzenden Gehrungs- bzw. Verbindungsflächen während des Schmelzprozesses von beiden Seiten gleichmäßig auf die Heizflächen des mittig feststehenden Heizelementes zu, wobei die Bewegung der Profilteile beispielsweise gegenläufig und senkrecht zu den Gehrungsschnittflächen oder senkrecht zur Längsachse des Profilteils erfolgen kann. Bei dem Diagonalschubverfahren dagegen ist eines der Profilteile feststehend positioniert, während sowohl das andere Profilteil als auch das Heizelement in Längsrichtung des feststehenden Profilteils bewegt wird.

Die Fügepartner selbst sind um den sogenannten Abbrand länger als das spätere Fertigmaß der verbundenen Elemente. Ein Teil dieses Abbrandes wird von dem Heizelement abgeschmolzen, ein anderer Teil wird in einem nächsten Schritt gefügt (gestaucht). Dieses Verhältnis des Abschmelzens und Stauchens des Abbrandes ist variabel. Auch der Abbrand selbst kann unterschiedlich sein.

Während des eigentlichen Abschmelzprozesses beginnt das PVC zu fließen und verformt sich, hierbei bewegt sich das Schmelzgut nach innen in die Profilkammern und nach außen auf die Sichtflächen des PVC-Profils. Um dieses Fließen und Verformen nach außen, also auf die Sichtflächen zu kontrollieren, wird das Profil mit Begrenzungselementen, wie z.B. Begrenzungsmessern eingeengt bzw. begrenzt. Dieses Begrenzungselement ist jedoch in bekannter Weise bei dem Schweißprozess selbst unbeweglich mit den Profilträgern verbunden. Die Begrenzungselemente selbst können zwar eng eingestellt werden, jedoch kommen sie nicht in Kontakt mit dem Profilanschlag und dem Heizelement, somit bleibt immer ein definierter Spalt, in den das Schmelzgut fließen kann. Dieses nach außen gedrückte Schmelzgut erstarrt im anschließenden Fügeprozess, so dass sich eine Schweißraupe bildet. Nach einer gewissen Abkühlzeit muss diese Schweißraupe entfernt werden.

Aus der DE 22 10 814 A ist eine Vorrichtung zum Entfernen von Schweißwulsten an der Stoßfuge zwischen miteinander verschweißten Kunststoffprofilstäben bekannt. Hierzu ist ein Messerpaar mit zwei Messern vorgesehen, die in Richtung der Wurzel der Schweißwulste aufeinander zubewegt werden, um die Schweißwulste abzustechen.

Aus der DE 30 01 370 A1 ist eine Vorrichtung zum Abstechen von überstehenden Schweißraupen an den Sichtflächen von aus Kunststoffprofilstäben geschweißten Fensterrahmen bekannt. Hierzu ist ein Fräswerkzeug für den das Rahmenaußeneck aufnehmenden Support vorgesehen, der in einem Maschinengestell längsverschiebbar geführt ist und mindestens ein Abstechmesser trägt, das bei der Supportbewegung an der Schweißraupe entlangbewegt wird.

Aus dem Stand der Technik ist zudem ein Verfahren bekannt, mit dem ein Austreten des Schmelzguts nach außen, also auf die Sichtflächen der Profilteile unterbunden wird. Hierzu ist wiederum ein Bearbeitungswerkzeug vorgesehen, mit dem ein Fließen und Verformen des Schmelzgutes kontrollierbar ist, wobei das Bearbeitungswerkzeug ein Formteil aufweist, welches zu dem Profilteil bewegbar ist. Im Rahmen dieses vorbekannten Verfahrens wird das Formteil bei einem Abschmelzen des zumindest einen Profilteils aus einer Ruheposition in Richtung zu einer Arbeitsposition relativ zu dem zumindest einen Profilteil und dem Heizelement bewegt.

Aus der DE 10 2016 104785 A1 und der WO 2017/157914 A1 ist eine Vorrichtung zum Verbinden von Profilteilen mit rechtwinklig zueinander angeordneten Profilträgern bekannt, die Profilträgeraufnahmen für die Aufnahme und das Einspannen von Profilteilen aufweisen. Ein Bearbeitungswerkzeug weist ein Formteil auf, mit dem ein Fließen und Verformen eines Schmelzgutes auf einer Sichtfläche einer Profilteils kontrollierbar ist. Das Formteil und die Profilträgeraufnahmen bilden einen Winkel zwischen 10° und 50° miteinander und das Formteil ist aus einer Ruheposition in Richtung zu einer Arbeitsposition relativ zu der Profilträgeraufnahme bewegbar.

Aus der EP 3 409 449 A1 ist ein Verfahren zum Verschweißen von zwei hohlen Profilstäben aus Kunststoff zur Bildung eines Fensterrahmens bekannt, bei dem die miteinander zu verbindenden Profilstäbe durch Einfügen eines Schweißspiegels zwischen deren Verbindungsflächen und Anpressen derselben an den Schweißspiegel unter Bildung von äußeren und inneren Wulsten auf eine vorgegebene Temperatur erhitzt und nach dem Entfernen des Schweißspiegels bei gleichzeitiger Vergrößerung des Schweißwulstes unter Druck zusammengefügt werden. Nach dem Entfernen des Schweißspiegels werden nur die an den Sichtflächen des späteren Fensterrahmens im Bereich der Verbindungsstellen der beiden Profilstäbe entstandenen äußeren Wülste unter Bildung einer schrägen Kante geringfügig nach innen gedrückt und dann zusammen mit den inneren Wülsten entfernt und anschließend werden die Verbindungsflächen der beiden Profilstäbe zusammengefügt.

Aus der DE 10 2015 107 121 A1 sind eine Vorrichtung und ein Verfahren zum Verschweißen von Kunststoffprofilteilen bekannt, wobei ein zweiteiliges Begrenzungselement vorgesehen ist, welches ein Fließen und Verformen von Schmelzgut des angeschmolzenen Profilteils kontrolliert. Das Begrenzungselement weist zumindest ein Anlageelement und ein Formteil auf, welche sowohl zueinander als auch zu dem Profilteil bewegbar sind.

Dabei ist auch vorgesehen, dass das Formteil in einer Horizontalrichtung, also parallel zur Oberfläche des zumindest einen Profilteils, bewegt wird. Diese Horizontalbewegung kann jedoch zur Folge haben, dass eine Schubbewegung auf das Kunststoffprofil ausgeübt wird, die zu einer Beschädigung des Profils führen kann. Nachteilig ist auch, dass das Schmelzgut, das mit dem Formteil in Berührung kommt sehr schnell abkühlt und dadurch die Güte der Schweißverbindung stark verschlechtert.

Das mit dem Formteil bewegte Schmelzgut verteilt sich im Bereich der Profilwandungen und kühlt das angrenzende Kunststoffmaterial ab.

Es ist deshalb Aufgabe der Erfindung, eine verbesserte Vorrichtung und ein verbessertes Verfahren zum Verbinden von Kunststoffprofilteilen bereitzustellen, die diese Nachteile vermeiden und zugleich den Austritt des Schmelzgutes kontrollierbarer gestalten, so dass ein Nachbearbeiten an den Sichtflächen der Schweißverbindung entfällt. Es ist außerdem die Aufgabe der Erfindung, einen Schweißprozess mit homogenerer Wärmeverteilung im Bereich des Eingriffs der Formteile mit dem Ergebnis einer höheren Güte der Schweißverbindung zu erreichen.

Die Aufgabe wird durch eine Vorrichtung mit den Merkmalen des Anspruchs 1 sowie durch ein Verfahren mit den Merkmalen des Anspruchs 11 gelöst. Vorteilhafte Ausgestaltungen der Erfindung ergeben sich aus den Unteransprüchen.

Die Erfindung betrifft eine Vorrichtung zum Verbinden von Kunststoffprofilteilen, insbesondere zum Verschweißen von PVC-Profilstäben zu Fensterrahmen und Türrahmen. Profilträger, die rechtwinklig oder stumpf zueinander angeordnet sein können, weisen Profilträgeraufnahmen für die Aufnahme und das Einspannen von Profilteilen auf. Wenigstens ein Profilteil und eine Heizfläche eines Heizelementes der Vorrichtung sind miteinander in Kontakt bringbar, um das wenigstens eine Profilteil in seinem Schweißbereich vor dem Zusammenfügen mit dem anderen Profilteil anzuschmelzen. Insbesondere können die Profilstäbe bzw. Profilteile einen Winkel von 15° bis 180° zueinander aufweisen.

Ein Bearbeitungswerkzeug ist vorgesehen, das zumindest ein Formwerkzeug bzw. Formteil aufweist, mit dem ein Fließen und Verformen eines Schmelzgutes auf einer Sichtfläche des Profilteils kontrollierbar ist. Das Formteil ist aus einer Ruheposition in Vorschubrichtung zu einer Arbeitsposition relativ zu der Profilträgeraufnahme bewegbar.

Erfindungsgemäß ist wenigstens ein in Vorschubrichtung dem Formteil vorauseilendes Trennwerkzeug zum Abtrennen und/oder Verschieben wenigstens eines Teils des Schmelzgutes vorgesehen. Das Formteil und das Trennwerkzeug können auch als sogenanntes Stufenwerkzeug bezeichnet werden.

Zur weiteren optischen Verbesserung der Sichtfläche des Profilteils wird mittels des Trennwerkzeugs das beim Anschmelzen entstehende Schmelzgut zumindest teilweise von der Sichtfläche des Profiteils abgetrennt und derart verschoben, dass es nicht mehr der Sichtfläche anhaftet. Insbesondere kann ein Teil des Schmelzgutes vor die Fügefläche des Profilteils verschoben werden, in welchem im gefügten Zustand der Profilteile kaum Lasten aufgenommen werden. Beispielsweise kann das Schmelzgut insbesondere bei teilweise hohl ausgestalteten Profilteilen in eine Aufnahme bzw. einen hohlen Bereich des Profilteils verschoben werden. Aus diesem Grund wird der äußere Bereich des Profils bzw. der Fügefläche, welcher in der Regel große Lasten trägt, von diesem durch das Trennwerkzeug abgetrennten Teil des Schmelzgutes nicht verunreinigt, so dass es aus diesem Grund nicht zu Schwächungen der Schweißverbindung kommt.

Dadurch, dass das Trennwerkzeug dem Formteil in Vorschubrichtung vorauseilt, wird zunächst ein Teil des Schmelzgutes abgetrennt und verschoben, ehe dann das Formteil noch verbleibendes Schmelzgut umformt.

Auch ist es hierdurch möglich, dass das Trennwerkzeug bei folierten Profilteilen die Dekor-/Schutzfolie einschneidet und verschiebt, so dass dadurch ein Bearbeitungsschritt, nämlich das zumindest teilweise Entfernen der Dekor-/Schutzfolie vom Profilteil vor dem Schweißprozess entfällt. Hierdurch ist das Bearbeitungsverfahren insgesamt effektiver ausgestaltet. Zudem kann ein Nachbearbeiten auf Folgestationen im Bereich der Sichtflächen entfallen.

Nach einer ersten Ausgestaltung der Erfindung sind das Bearbeitungswerkzeug und das Trennwerkzeug an einem gemeinsamen Werkzeughalter, vorzugsweise lösbar, gehalten. Aus diesem Grund ist ein besonders einfaches Nachrüsten des Trennwerkzeugs an eine bereits vorhandene Vorrichtung möglich. Auch kann hierdurch das Trennwerkzeug mittels eines bereits vorhandenen, auf das Bearbeitungswerkzeug einwirkenden, Antriebs mitbewegt werden. Insbesondere kann vorgesehen sein, dass das Trennwerkzeug an dem Formteil, vorzugsweise lösbar, gehalten ist. Hierdurch ist gewährleistet, dass zum einen eine einfache Montage des Trennwerkzeugs möglich ist und zum anderen, dass das Trennwerkzeug und das Formteil einen vorgegebenen oder vorgebbaren Abstand zueinander aufweisen, so dass das Trennwerkzeug dem Formteil in einem definierten Abstand vorauseilt. Auch kann alternativ oder zusätzlich vorgesehen sein, dass das Trennwerkzeug und das Formteil im montierten Zustand im Wesentlichen parallel zueinander ausgerichtet sind oder aber alternativ einen bestimmten Winkel zueinander aufweisen.

Gemäß einer vorteilhaften Weiterbildung der Erfindung ist das Trennwerkzeug als Trennmesser mit einer Schneidkante ausgebildet, wodurch in besonders einfacher Weise erreicht wird, dass zum einen das Schmelzgut abgetrennt und verschoben wird und zum anderen die Dekor-/Schutzfolie bei folierten Profilteilen eingeschnitten und ebenfalls verschoben wird. Aus diesem Grund kann die Schneidkante des Trennwerkzeugs besonders scharf ausgestaltet sein, so dass die Dekor-/Schutzfolie der folierten Profilteile leicht durchtrennt werden kann.

Zur weiteren Erhöhung der Effektivität der Vorrichtung verlaufen in einer vorteilhaften Variante der Erfindung die Unterkante des Formteils und die Schneidkante des Trennwerkzeugs im Wesentlichen parallel zueinander, so dass die Schneidkante des dem Formteil vorauseilenden Trennwerkzeugs auf dem Profilteil aufsetzt und, bei folierten Profilteilen, zunächst die Dekor-/Schutzfolie an einer Schnittkante durchtrennt, und dann das Schmelzgut abtrennt und verschiebt.

Es kann ferner vorgesehen sein, dass das in Vorschubrichtung gegenüber dem Trennwerkzeug nacheilende Formteil derart ausgerichtet ist, dass es auf der Sichtflächenkante des Profilteils an der Schnittkante des Trennwerkzeugs oder davor auf dem Profilteil aufsitzt und wenigstens einen Teil des verbliebenen Schmelzgutes trennt und verschiebt. Insbesondere bei einer parallelen Anordnung der Unterkante des Formteils und der Schneidkante des Trennwerkzeugs ist ein besonders sauberes und effektives Bearbeiten der Profilteile möglich.

In einer weiteren vorteilhaften Ausgestaltung der Erfindung verlaufen die Unterkante des Formteils und die Schneidkante des Trennwerkzeugs im Wesentlichen in Bezug auf die Sichtfläche der Profilteile schräg bzw. diagonal, insbesondere in einem Winkelbereich von 40° bis 80°. Hierdurch wird das Schmelzgut durch das Trennwerkzeug über die äußere Wandung der Sichtfläche in einen Hohlraum des Profilteils geschoben werden. Bei zu flacher Anordnung des Trennwerkzeugs wird ein zu großer Bereich der Profiloberfläche verletzt.

Mit anderen Worten kann das Formteil schräg bzw. diagonal auf das Profilteil bzw. auf die Profilträgeraufnahme zubewegt werden. Es hat sich gezeigt, dass durch diese konstruktive Ausgestaltung eine verbesserte Sichtflächenbearbeitung erzielbar ist, die zu keiner Beschädigung der Profilteile, auch von folierten Profilteilen führt. Insbesondere entsteht keine Schweißraupe nach dem Schweißvorgang.

Nach einer alternativen Ausgestaltung der Erfindung ist vorgesehen, dass das Formteil und das Trennwerkzeug vertikal und/oder horizontal frei verfahrbar sind, so dass ein besonders effektives Bearbeiten der Profilteile möglich ist.

Es kann in einer alternativen Ausgestaltung der Erfindung vorgesehen sein, dass das Formteil und/oder das Trennwerkzeug und die Profilträgeraufnahmen einen Winkel α zwischen 40° und 80°, insbesondere zwischen 45° und 75°, miteinander bilden.

Vorzugsweise kann vorgesehen sein, dass das Formteil und das Trennwerkzeug in Richtung einer möglichen Gehrung der Profilteile beziehungsweise entlang der und/oder bis vor die Stirnseitenschnittkante des Profilteils bewegbar sind. Wie erwähnt, können die Profilstäbe bzw. Profilteile einen Winkel von 15° bis 180° zueinander aufweisen. Diese Bewegung des Formteils und des Trennwerkzeugs hat den Vorteil, dass zum einen die für die Bewegung dieser Bauteile erforderliche Kraft geringer ausfällt als bei einer reinen Bewegung des Formteils und des Trennwerkzeugs auf die Stirnseitenschnittkante zu. Außerdem hat sich gezeigt, dass die mit einer solchen Formteilbewegung erzielbare Optik und Formgebung der fertigen Schweißverbindung durch die zusätzliche Bewegungsrichtung positiv beeinflusst wird. Dieser Effekt ist insoweit vergleichbar mit dem Schneiden eines Messers, als die zur Bewegung des Formteils bzw. Formmessers sowie des Trennwerkzeugs benötigte Kraft geringer ausfällt, auch wenn kein Schneidvorgang sondern nur ein Kontrollieren des Fließens und/oder ein Verschieben oder Verdrängen von Schmelzgut stattfindet. Die Bewegung des Formteils und des Trennwerkzeugs dient zur Formgebung und Kontrolle des angeschmolzenen Kunststoff-, insbesondere PVC-Materials während des Verbindungsprozesses.

Eine weitere Ausgestaltung der Erfindung sieht vor, dass das Bearbeitungswerkzeug ein Begrenzungsmesser aufweist, das oberhalb und/oder unterhalb der Profilträgeraufnahmen und parallel zu den Profilträgeraufnahmen angeordnet ist, wobei das Begrenzungsmesser oder ein Teil des Begrenzungsmessers in Längsrichtung der Profilträgeraufnahmen zwischen 0° und 2° von der Längsrichtung der Profilträgeraufnahmen abweicht. Hierdurch wird eine verbesserte Kontrolle des Fliesens und Verformens des Kunststoffs erreicht.

Denkbar ist auch, dass das Begrenzungsmesser oder ein Teil des Begrenzungsmessers in Längsrichtung der Profilträgeraufnahmen 1° von der Längsrichtung der Profilträgeraufnahmen abweicht. Vorzugsweise ist das Bearbeitungswerkzeug oberhalb und/oder unterhalb der Profilträgeraufnahmen angeordnet.

Es ist auch denkbar, dass die Kraft zur Bewegung des Formteils einstellbar ist. Die Kraft wird dabei bevorzugt dosiert eingestellt.

Es kann auch vorgesehen sein, dass das Bearbeitungswerkzeug ein Konturteil für die Bearbeitung von Innenecken von in den Profilträgeraufnahmen rechtwinklig angeordneten Profilträgern aufweist, wobei das Konturteil seitlich des Formteils angeordnet und ausgebildet sein kann. Durch diese konstruktive Maßnahme wird auch der Austritt der Schmelze an Innenecken von zusammengefügten Profilen kontrollierbarer gestaltet.

Vorteilhafter Weise ist das Formteil und/oder das Trennwerkzeug über etwa 50°C, bevorzugt zwischen 40°C und 180°C, besonders bevorzugt zwischen 70°C und 90°C, insbesondere etwa 80°C, erwärmbar. Hierdurch wird während des Zusammenfügens der Profilteile eine gleichmäßigere Temperaturverteilung und somit eine homogenere Schweißverteilung erreicht, was wiederum zur Verbesserung bzw. Erhöhung der Festigkeitswerte an den Ecken der zusammengefügten Profilteile führt.

Gemäß einer weiteren vorteilhaften Ausgestaltung der Erfindung ist die Klinge des Trennwerkzeugs, insbesondere mittels eines hydraulischen, pneumatischen, elektrischen oder mechanischen Antriebs, in das Profilteil einbringbar. Die Klinge dringt mit ihrer Schneidkante in einer Trennposition zunächst in das Profilteil ein. Die für diese Eindringbewegung notwendige Kraft kann hydraulisch, pneumatisch oder elektrisch, insbesondere mittels eines sogenannten Proportionalventils auf das Trennwerkzeug des Formteils mit seiner Klinge ausgeübt werden. Anstatt einer direkten hydraulischen, pneumatischen oder elektrischen Umsetzung kann alternativ oder zusätzlich auch eine mechanische Kopplung der Klinge auf die Oberfläche des Profilteils realisiert werden.

Eine weitere Ausgestaltung der Erfindung sieht vor, dass die Klinge des Trennwerkzeugs in etwa horizontal in Bezug auf die Oberfläche des Profilteils hin und her bewegbar angeordnet ist, insbesondere um eine das Profilteil umgebende Dekor-/Schutzfolie zu durchtrennen.

Gemäß einer Ausführungsform der Erfindung wird das Trennwerkzeug des Formteils mit seiner Klinge, beispielsweise während des Angleich- und Anwärmprozesses von seiner Ausgangsposition in eine Trennposition gebracht. Beim Angleich- und Anwärmprozess werden die Verbindungsflächen an den Profilstabenden in der Fügerichtung gegen die Heizflächen des Heizelementes gedrückt, wobei Material an der Verbindungsfläche, d.h. im Schweißbereich geschmolzen wird. Die Trennposition kann zwischen 0,2 mm und 0,7 mm, vorzugsweise ca. 0,5 mm innerhalb der Oberfläche des Profilteils liegen.

Die Klinge kann demnach bereits in das Profilteil eingedrungen sein, bevor das Trennwerkzeug des Formteils mit seiner Klinge horizontal in Bezug auf die Oberfläche des Profilteils nach Art einer Schneidbewegung eines Messer, beispielsweise eines Brotmessers, hin und her bewegt wird, um eine das Profilteil umgebende Dekor-/Schutzfolie zu durchtrennen.

Es ist auch denkbar, dass die Klinge nach Abschluss der Durchtrennung der Dekor-/Schutzfolie in eine vorgegebene Position verbracht wird. Das Durchtrennen der Dekor-/Schutzfolie kann insbesondere spätestens vor Beendigung der sogenannten Nachwärmzeit beendet sein, so dass das Trennwerkzeug des Formteils mit Klinge von der Trennposition in seine Ausgangsposition zurück bewegt wird. Unter der Nachwärmzeit versteht man die nötige Tiefenwärme, um das Material in einen optimalen Fügeprozess zu bringen.

Im Rahmen der Erfindung könnte es auch vorgesehen sein, dass das Durchtrennen der Dekor-/Schutzfolie auch während des oben beschriebenen Abtrennens und Umformens des Schmelzgutes durchgeführt wird. Der Verfahrensschritt des Durchtrennens ist nicht darauf beschränkt, ausschließlich während der Aufwärmphase ausgeführt zu werden.

Ein Verfahren zum Verbinden von Profilteilen, bei dem die Profilteile in Profilträgeraufnahmen aufgenommen und eingespannt werden, ist Gegenstand von Anspruch 11. Bei diesem erfindungsgemäßen Verfahren werden wenigstens ein Profilteil und eine Heizfläche eines Heizelementes miteinander in Kontakt gebracht, um das wenigstens eine Profilteil in seinem Schweißbereich vor einem Zusammenfügen mit dem anderen Profilteil anzuschmelzen, wobei ein Bearbeitungswerkzeug vorgesehen ist, das zumindest ein Formteil aufweist, mit dem ein Fließen und Verformen eines Schmelzgutes auf einer Sichtfläche einer Profilteils kontrolliert wird und das Formteil in Vorschubrichtung der Profilträgeraufnahmen bewegt wird.

Das erfindungsgemäße Verfahren zeichnet sich dadurch aus, dass wenigstens ein in Vorschubrichtung dem Formteil vorauseilendes Trennwerkzeug zumindest einen Teil des Schmelzgutes abtrennt und/oder verschiebt.

Gemäß einer vorteilhaften Ausgestaltung der Erfindung kann vorgesehen sein, dass das vom Trennwerkzeug abgetrennte Schmelzgut in einen, vorzugsweise eine Ausnehmung aufweisenden Bereich des Profilteils verschoben wird.

Eine weitere Alternative des erfindungsgemäßen Verfahrens sieht vor, dass das Formteil und die Profilträgeraufnahmen einen Winkel α zwischen 40° und 80°, insbesondere zwischen 45° und 75°, miteinander bilden.

In einer praktikablen Variante kann das Formteil zusammen mit seiner Unterkante und/oder das Trennwerkzeug eine Bewegung zwischen 0° und 85° vollziehen. Hierdurch kann das Formteil vor die Profilstirnkante, auch während der Prozesse des Schweißens und des Stauchens, gefahren werden. Das Formteil bildet mit seiner Unterkante vorzugsweise ein Formmesser, wobei die Bewegung vorteilhafterweise mittels eines Stellmotor, besonders bevorzugt auch während der Bewegung des Formmessers erfolgt. Alternativ kann die Bewegung auch mittels Kreuzschlitten erfolgen.

In einer Weiterbildung der Erfindung ist vorgesehen, dass das in Vorschubrichtung gegenüber dem Trennwerkzeug nacheilende Formteil auf der Sichtflächen bzw. der Sichtflächenkante des Profilteils an der Schnittkante des Trennwerkzeugs auf dem Profilteil aufsetzt.

Gemäß einer weiteren vorteilhaften Ausgestaltung der Erfindung weicht ein oberhalb und parallel zu den Profilträgeraufnahmen bewegbares Begrenzungsmesser des Bearbeitungswerkzeugs oder ein Teil eines oberhalb der Profilträgeraufnahmen bewegbaren und parallel zu den Profilträgeraufnahmen bewegbaren Begrenzungsmessers des Bearbeitungswerkzeugs bei seiner Bewegung in Längsrichtung der Profilträgeraufnahmen zwischen 0° und 2°, bevorzugt 1°, von der Längsrichtung der Profilträgeraufnahmen ab.

In einer weiteren vorteilhaften Variante des erfindungsgemäßen Verfahrens wird die vertikale Bewegung des Formteils und des Trennwerkzeugs, die über die Profiloberfläche des Profilteils hinausgeht, zwischen 1 mm und 10 mm, vorzugsweise zwischen 3 mm und 5 mm, eingestellt, wobei das Formteil und das Trennwerkzeug oberhalb und/oder unterhalb der Profiloberfläche angeordnet sind und die vertikale Bewegung aus der unteren und/oder oberen Position in Richtung der Profiloberfläche erfolgt.

Es kann auch vorgesehen sein, dass das Formteil und das Trennwerkzeug während des kompletten Schweißprozesses der Profilteile zwischen 0 mm und 2 mm seitlich zur möglichen Gehrung der Profilteile verschoben werden.

Nach einer weiteren vorteilhaften Ausgestaltung des erfindungsgemäßen Verfahrens werden das Formteil und das Trennwerkzeug in Richtung einer möglichen Gehrung der Profilteile beziehungsweise entlang der und/oder bis vor die Stirnseitenschnittkante des Profilteils bewegt.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnungen, wobei gleiche oder gleich wirkende Elemente zumeist mit denselben Bezugszeichen versehen sind. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen und deren Rückbeziehung.

Es zeigen schematisch:
- Fig. 1: eine perspektivische Ansicht der Vorrichtung gemäß der Erfindung,
- Fig. 2: eine Seitenansicht der Vorrichtung aus Figur 1,
- Fig. 3: eine perspektivische Ansicht einer weiteren Ausführungsform der Vorrichtung aus Figur 1,
- Fig.4: eine Vorderansicht der Vorrichtung aus Figur 2,
- Fig. 5: eine perspektivische Ansicht einer weiteren Ausführungsform der erfindungsgemäßen Vorrichtung,
- Figur 6: eine perspektivische Ansicht einer weiteren Ausführungsform der Vorrichtung aus Figur 1,
- Figur 7: eine Seitenansicht der Vorrichtung mit Teilausschnitten a), b) und c) unterschiedlicher Ausgestaltungen des Formteils mit Trennwerkzeug,
- Figur 8: jeweils eine Seitenansicht der Vorrichtung gemäß Fig. 7, wobei bis unterschiedliche Bearbeitungsschritte der Vorrichtung gezeigt sind, Figur 11
- Figur 12: eine perspektivische Ansicht der Vorrichtung aus Figur 1 mit Detailansicht des Formteils und des Trennwerkzeugs,
- Figur 13: eine weitere perspektivische Ansicht der Vorrichtung gemäß Figur 12,
- Figur 14: eine weitere perspektivische Ansicht der Vorrichtung gemäß Figur 12,
- Figur 15: eine perspektivische Ansicht des Profilteils mit geformter Fläche,
- Figur 16: eine weitere perspektivische Ansicht der Vorrichtung gemäß Figur 12 und
- Figur 17: eine weitere perspektivische Ansicht der Vorrichtung gemäß Figur 12.

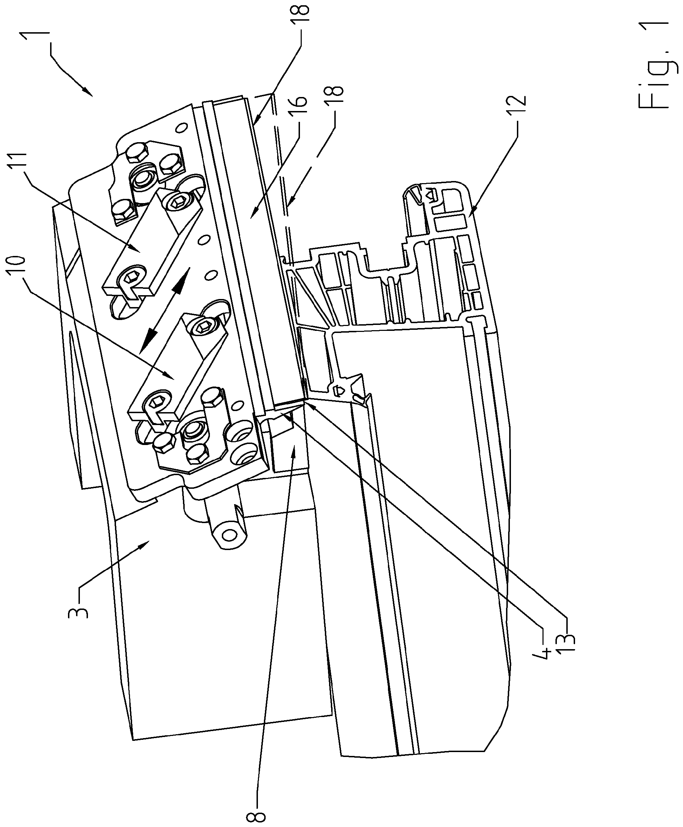

Figur 1 zeigt eine perspektivische Ansicht einer Vorrichtung 1 zum Verbinden von zwei Kunststoffprofilteilen, wobei in Figur 1 nur das erste Profilteil 12 gezeigt ist.

Die Vorrichtung 1 weist einen in Figur 1 nicht gezeigten ersten Profilträger und einen in Figur 1 nicht gezeigten zweiten Profilträger auf. Die Profilträger sind im vorliegenden Ausführungsbeispiel im rechten Winkel zueinander angeordnet. Es kann aber auch vorgesehen sein, dass die Profilstäbe bzw. Profilteile 12 einen Winkel von 15° bis 180° zueinander aufweisen. Der erste Profilträger kann in eine erste Fügerichtung bewegt werden. Der zweite Profilträger kann in eine zweite Fügerichtung bewegt werden, wobei die erste Fügerichtung und die zweite Fügerichtung senkrecht zueinander stehen können.

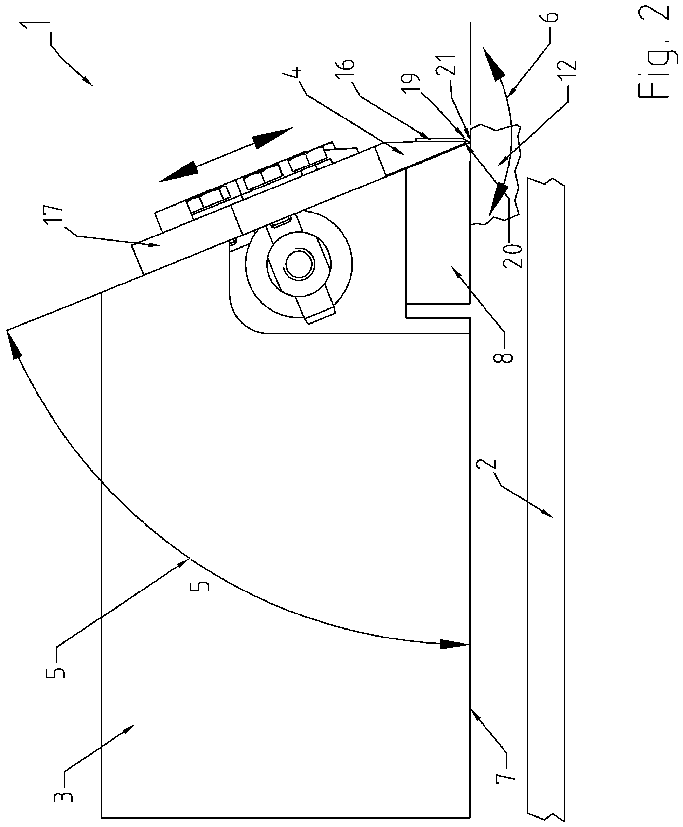

Der in Figur 1 und Figur 2 nicht gezeigte erste Profilträger weist eine Profilträgeraufnahme 2 für die Aufnahme und zum Einspannen des Profilteils 12 auf, wobei das Profilteil 12, das foliert sein kann, und eine Heizfläche eines Heizelementes der Vorrichtung 1 miteinander in Kontakt gebracht werden, um das Profilteil 12 in seinem Schweißbereich vordem Zusammenfügen mit dem anderen in Figur 1 nicht gezeigten Profilteil anzuschmelzen.

Wie Figur 1 und Figur 2 weiter verdeutlicht, weist die Vorrichtung 1 ein Bearbeitungswerkzeug 3 auf, das in der gezeigten Ausführungsform der Vorrichtung 1 oberhalb des Profilteils 12, der Profilträger und der Profilträgeraufnahme 2 angeordnet ist.

Das Bearbeitungswerkzeug 3 kann generell oberhalb und/oder unterhalb des Profilteils 12, der Profilträger und der Profilträgeraufnahme 2 angeordnet sein.

In dem unteren Bereich der Vorderseite des Bearbeitungswerkzeugs 3 befindet sich ein Formteil 4 mit der Unterkante 13 und Formfläche 20, mit dem ein Fließen und Verformen eines Schmelzgutes 24 auf einer Sichtfläche 22 des Profilteils 12 kontrollierbar ist und das aus einer Ruheposition in Vorschubrichtung zu einer Arbeitsposition relativ zu der Profilträgeraufnahme 2 bewegbar ist, was durch den in Figur 2 gezeichneten Pfeil verdeutlicht ist. Das in Figur 2 gezeigte Profilteil 12 ist in dem Bereich 6 zwischen der Unterseite 7 des Bearbeitungswerkzeugs 3 und der in Figur 2 gezeigten Profilträgeraufnahme 2 einspannbar. Figur 2 zeigt eine Seitenansicht der Vorrichtung 1.

Die Kraft zur Bewegung des Formteils 4 ist einstellbar. Zudem können die Antriebe zur Bewegung des Formteils 4 elektrisch oder pneumatisch angetrieben sein. Das vordere, den Profilträgeraufnahmen 2 zugewandte Ende des Formteils 4 ist spitz oder abgerundet.

Das Formteil 4 kann eine Auf- und Abwärtsbewegung vollziehen, d.h. das Formteil 4 ist aus einer Ruheposition in Vorschubrichtung zu einer Arbeitsposition relativ zu der Profilträgeraufnahme 2 bewegbar. Das Formteil 4 und die Profilträgeraufnahme 2 können einen Winkel a, der zwischen 40° und 80°, insbesondere zwischen 45° und 75°, betragen kann und in Figur 2 mit dem Bezugszeichen 5 versehen ist, miteinander bilden.

In erfindungswesentlicher Weise ist wenigstens ein in Vorschubrichtung dem Formteil 4 vorauseilendes Trennwerkzeug 16 zum Abtrennen und/oder Verschieben wenigstens eines Teils des Schmelzgutes 24 vorgesehen. Mittels des Trennwerkzeugs 16 wird das beim Anschmelzen entstehende Schmelzgut 24 zumindest teilweise von der Sichtfläche 22 des Profiteils 12 abgetrennt und derart verschoben, dass es nicht mehr der Sichtfläche 22 anhaftet. Insbesondere kann ein Teil des Schmelzgutes 24 vor die Fügefläche des Profilteils 12 verschoben werden, in welchem im gefügten Zustand der Profilteile 12 kaum Lasten aufgenommen werden. Beispielsweise kann das Schmelzgut 24, insbesondere bei teilweise hohl ausgestalteten Profilteilen 12, in eine Aufnahme bzw. einen hohlen Bereich des Profilteils 12 verschoben werden. Daher wird der äußere Bereich des Profils 12 bzw. der Fügefläche von diesem durch das Trennwerkzeug 16 abgetrennten Teil des Schmelzgutes 24 nicht verunreinigt, so dass es aus diesem Grund nicht zu Schwächungen der Schweißverbindung kommt.

Dadurch, dass das Trennwerkzeug 16 dem Formteil 4 in Vorschubrichtung vorauseilt, wird zunächst ein Teil des Schmelzgutes 24 abgetrennt und verschoben, ehe das Formteil 4 noch verbleibendes Schmelzgut 24 umformt. Das Formteil und das Trennwerkzeug können auch als sogenanntes Stufenwerkzeug bezeichnet werden.

Das Trennwerkzeug 16 erfüllt darüber hinaus auch eine Doppelfunktion, indem es bei folierten Profilteilen 12, d. h. bei Profilteilen 12, welche in einer Dekor-/Schutzfolie verpackt sind, die Dekor-/Schutzfolie einschneidet und verschiebt, so dass dadurch ein Bearbeitungsschritt, nämlich das zumindest teilweise Entfernen der Dekor-/Schutzfolie vom Profilteil 12, entfällt.

In der hier vorgestellten Ausführungsvariante der Erfindung sind das Bearbeitungswerkzeug 3 und das Trennwerkzeug 16 an einem gemeinsamen Werkzeughalter 17, vorzugsweise lösbar, gehalten, insbesondere ist das Trennwerkzeug 16 an dem Formteil 4, vorzugsweise lösbar, gehalten, so dass das Trennwerkzeug 16 dem Formteil 4 in einem definierten Abstand vorauseilt. Ferner sind das Trennwerkzeug 16 und das Formteil 4 im montierten Zustand im Wesentlichen parallel zueinander ausgerichtet, was insbesondere aus den Fig. 2, 3 und 5 hervorgeht.

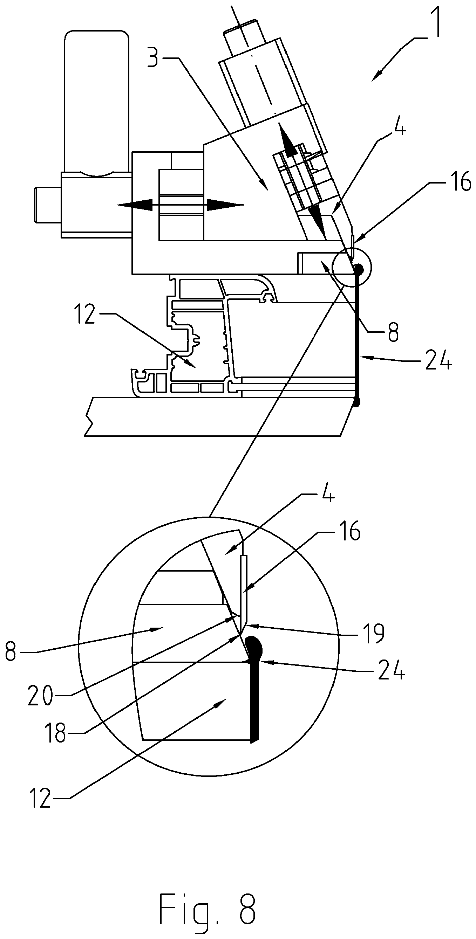

Eine Schneidkante 18 des dem Formteil 4 vorauseilenden Trennwerkzeugs 16 setzt auf dem Profilteil 12 auf. Es durchtrennt bei folierten Profilteilen 12 zunächst die Dekor-/Schutzfolie an einer Schnittkante 21. In der gleichen Bewegung trennt das Trennwerkzeug 16 das Schmelzgut 24 ab und verschiebt es. Die Unterkante 13 des Formteils 4 setzt erst auf der Schnittkante 21 oder in Richtung der Stirnseitenschnittkante 23 vor der Schnittkante 21 auf dem Profilteil 12 auf, wenn das Trennwerkzeug 16 diesen Bereich bereits verlassen hat. Dieser Prozess wird durch die weiter unten beschriebenen Fig. 8 bis 11 weiter verdeutlicht.

Vorliegend ist das Trennwerkzeug 16 als Trennmesser mit der Schneidkante 18 und einer Klinge 19 ausgebildet. Die Klinge 19 bzw. Schneidkante 18 des Trennwerkzeugs 16 ist besonders scharf ausgestaltet, so dass die Dekor-/Schutzfolie des folierten Profilteils 12 leicht durchtrennt werden kann.

Wie Figur 1 weiter zeigt, kann das Trennwerkzeug 16 bzw. seine Schneidkante 18 anstatt parallel zur Unterkante 13 des Formteils 4 auch schräg zum Formteil 4 bzw. dessen Unterkante 13 angeordnet sein, was durch die gestrichelte Darstellung des Trennwerkzeugs 16 mit Schneidkante 18 in Figur 1 symbolisiert ist.

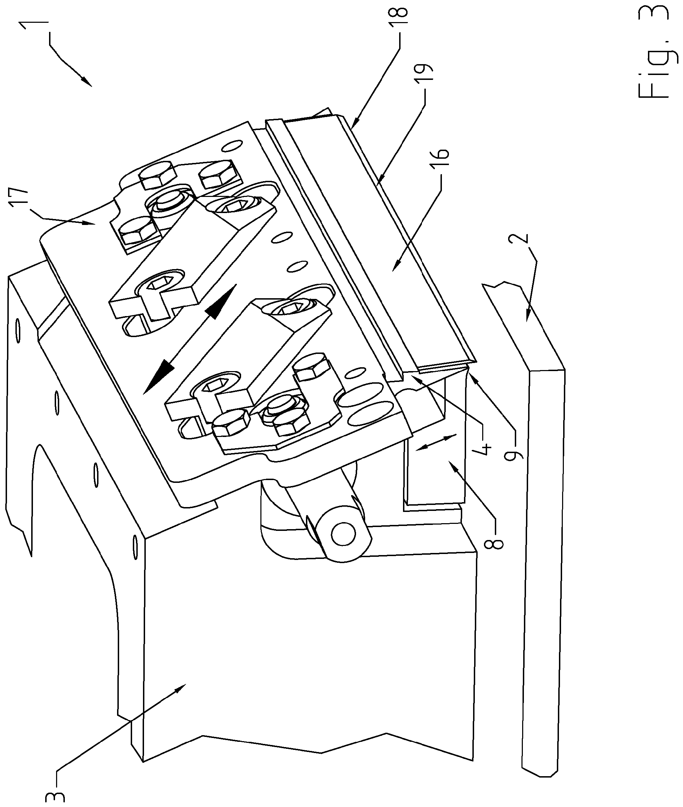

Das Bearbeitungswerkzeug 3 weist weiterhin, wie aus Figur 1 weiter hervorgeht, ein Begrenzungsmesser 8 auf, das oberhalb des Profilteils 12 und parallel zu diesem angeordnet ist, wobei das Begrenzungsmesser 8 oder ein Teil des Begrenzungsmessers 8 in Längsrichtung der in Figur 2 gezeigten Profilträgeraufnahme 2 ca. 1° von der Längsrichtung der Profilträgeraufnahme 2 abweicht. Der Winkel dieser Abweichung ist in Figur 3, welche die Vorrichtung 1 zeigt, mit dem Bezugszeichen 9 versehen.

Profilträgeraufnahmen 2 können beispielsweise Gehrungskanten aufweisen, die aneinander anstoßen, d.h. die entsprechenden Profilteile 12 sind dann an ihren Stirnseitenschnittkanten 23 auf Gehrung geschnitten. Auf Gehrung geschnittene Profilteile 12 offenbart beispielsweise die DE 10 2014 118 368 B3. Das in Figur 3 gezeigte Formteil 4 des Bearbeitungswerkzeugs 3 vollzieht daher eine weitere Bewegung derart, dass das Formteil 4 in Richtung der Profilträgeraufnahme 2 bewegbar ist. Bewegungszustände dieser Bewegung sind in den Figuren 1, 3, 4 und 5 verdeutlicht. Das Formteil 4 wird während des Anschmelzens der Profilteile 12 und/oder des Fügens und/oder des kompletten Schweißprozesses der Profilteile 12 zwischen 0 mm und 2 mm seitlich zur Gehrung der Profilteile 12 verschoben. Wie aus den Figuren 1, 3, 4 und 5 und der darin eingezeichneten Doppelpfeile entnehmbar ist, bewegt sich das Formteil 4 in Richtung der Gehrung der Profilteile 12 beziehungsweise entlang der und/oder bis vor die Stirnseitenschnittkante 23 des Profilteils 12. Die Bewegung, die das Formteil 4 somit ausführt, weist folglich eine Komponente auf die Stirnseitenschnittkante 23 des Profilteils 12 zu sowie eine Komponente entlang der Stirnseitenschnittkante 23 auf.

In Figur 1 hat das Formteil 4 eine Abwärtsbewegung vollzogen, sodass sich die Unterkante 13 des Formteils 4 ein Stück vor der Stirnseitenschnittkante 23 des Profilteils 12 befindet. Die Führungselemente 10, 11 führen diese Bewegung, wie der in Figur 1 gezeigte Pfeil verdeutlicht.

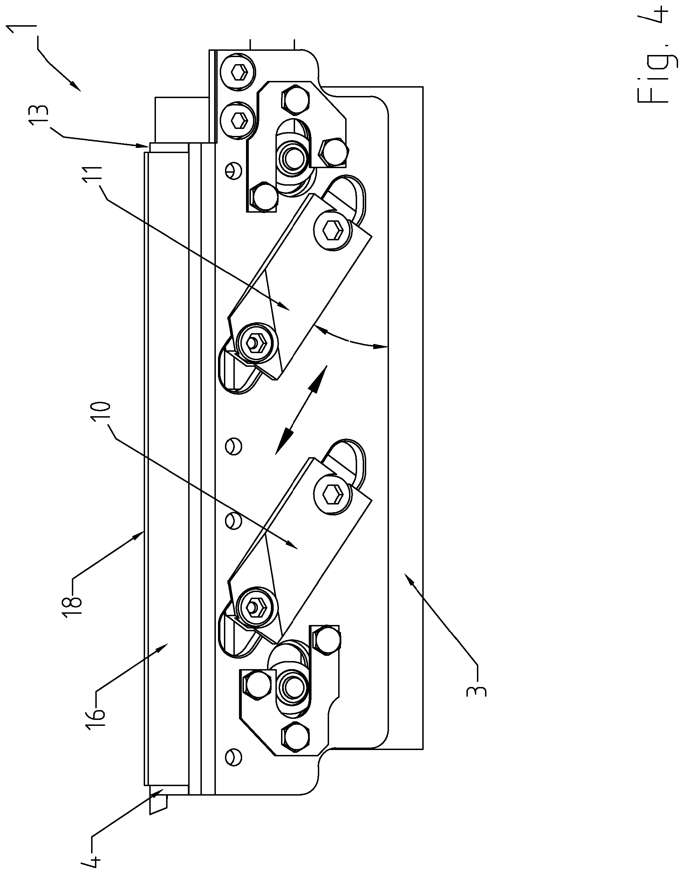

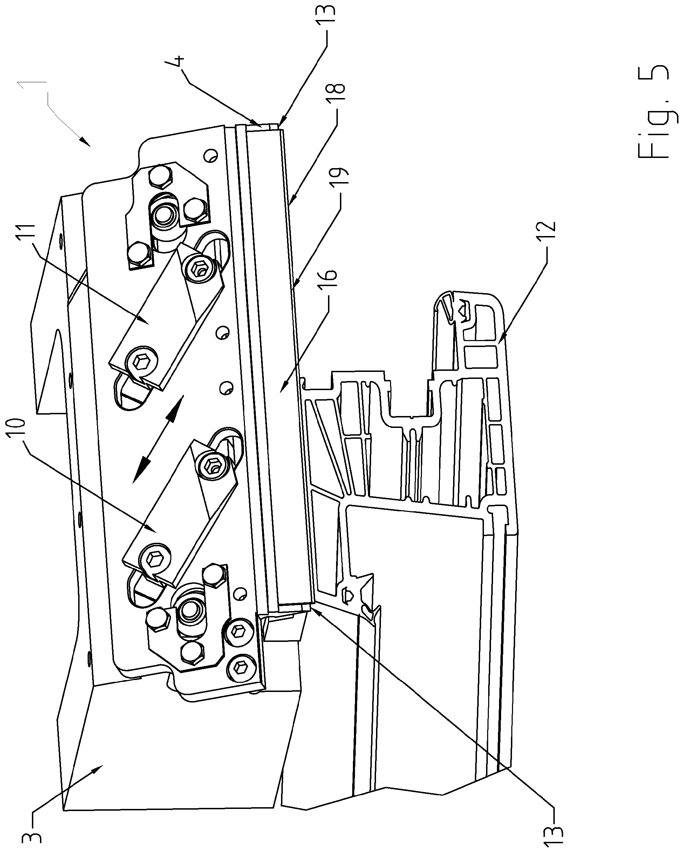

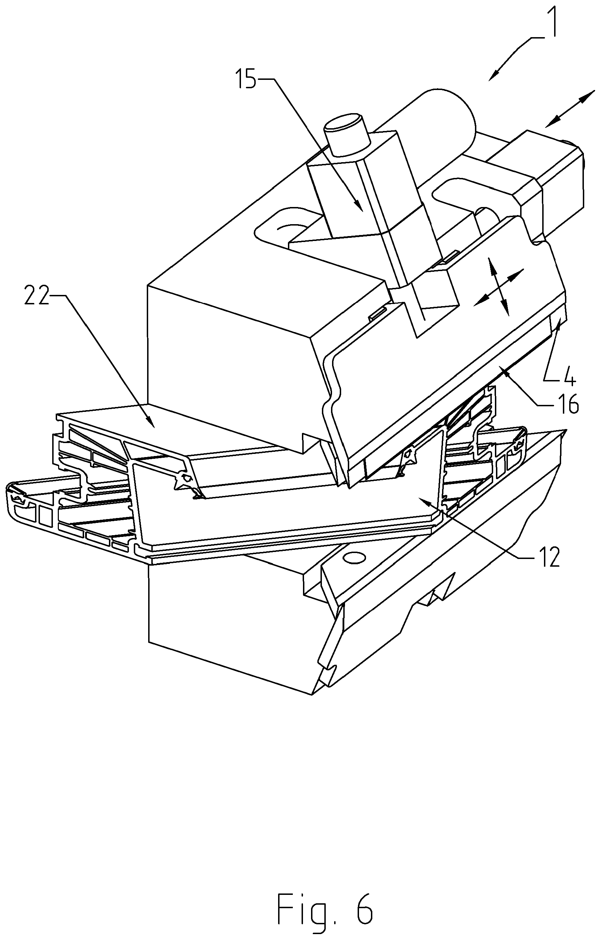

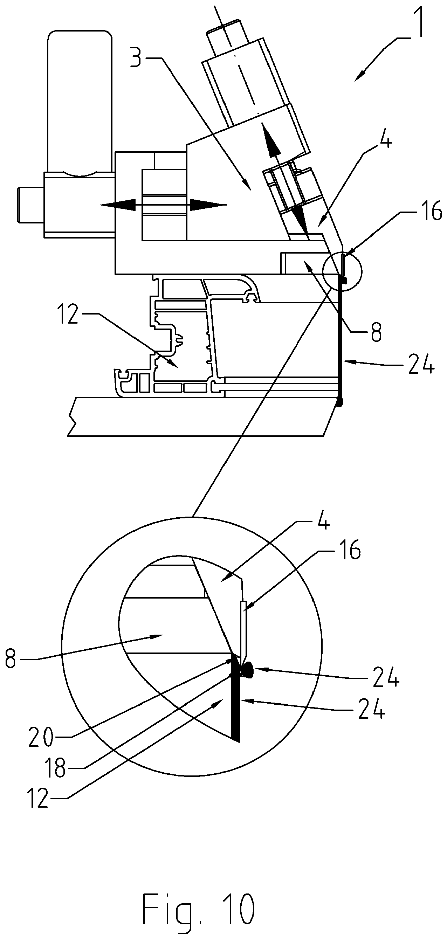

Figur 6 zeigt eine weitere Ausführungsform der Vorrichtung 1, wobei die in Figur 5 gezeigten Führungselemente 10, 11 durch das Führungselement 15 ersetzt wurden. Das Führungselement 15 kann sowohl eine translatorische Bewegung als auch eine Schwenkbewegung ausführen. In Figur 10 hat das Formteil 4 eine Abwärtsbewegung vollzogen, sodass sich die Unterkante 13 des Formteils 4 ein Stück vor der Stirnseitenschnittkante 23 des Profilteils 12 befindet. Das Formteil 4 bildet zusammen mit der Unterkante 13 ein Formmesser. Das Formteil 4 kann mehrere Bewegungsrichtungen einnehmen. Es ist vertikal und / oder horizontal frei verfahrbar, wobei diese Bewegungen zeitversetzt erfolgen. Durch diese konstruktive Ausgestaltung und diesen Bewegungsablauf bewegt sich das Formteil während des Schweißprozesses auf der Sichtfläche 22 bzw. der Sichtflächenkante des Profilteils 12 zu unterschiedlichen Zeiten, d.h. während des Schmelzvorgangs und des Vorgangs des Stauchens. Hierdurch gelingt ein kontrolliertes Unterdrücken bzw. Umlegen einer Schweißraupe während des Schmelzvorgangs und Stauchungsprozesses. Die vertikale Bewegung des Formteils 4, die über die Profiloberfläche des in Figur 4 gezeigten Profilteils 2 hinausgeht, kann hierzu zwischen 0 mm und 4 mm eingestellt werden.

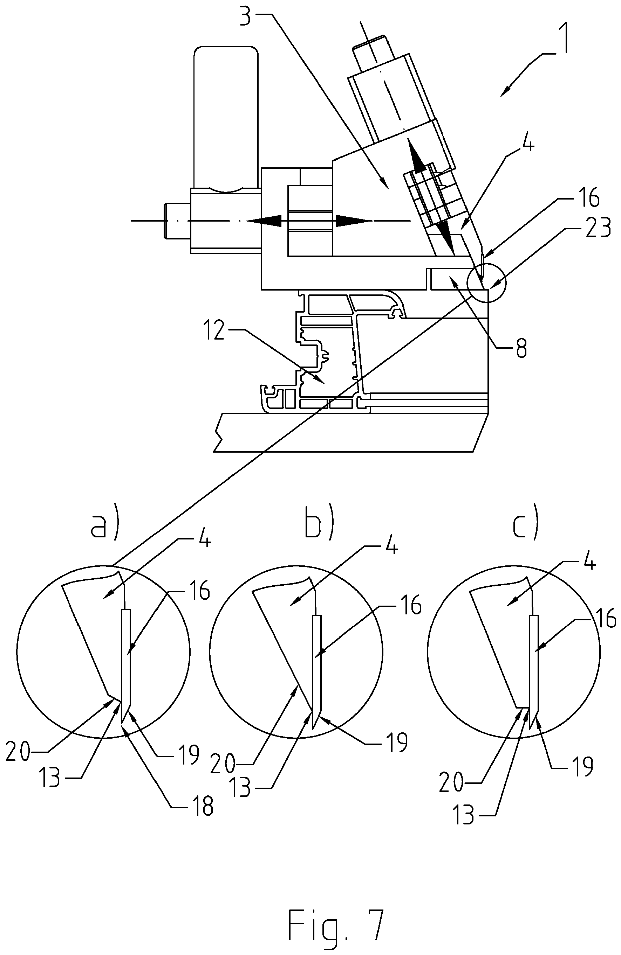

Die Unterkante 13 bzw. der untere Bereich des Formelements 4 können, wie die Teilausschnitte a), b) und c) in Figur 7 verdeutlichen, verschiedene Formen haben bzw. annehmen. Die Unterkante 13 des Formteils 4 hat in Teilausschnitt a) eine schrägen, in Teilausschnitt b) einen spitzen und in Teilausschnitt c) einen stumpfen Verlauf.

Die Fig. 8 bis 11 entsprechen der Darstellung gemäß Fig. 7 und zeigen verschiedene Verfahrensschritte der Vorrichtung 1.

Aus Fig. 8 und der entsprechenden Detailansicht geht ein angeschmolzenes Profilteil 12 hervor, welches Schmelzgut 24 aufweist. Ferner ist das dem Formteil 4 mit seiner Formfläche 20 vorauseilende Trennwerkzeug 16 mit Klinge 19 zu erkennen.

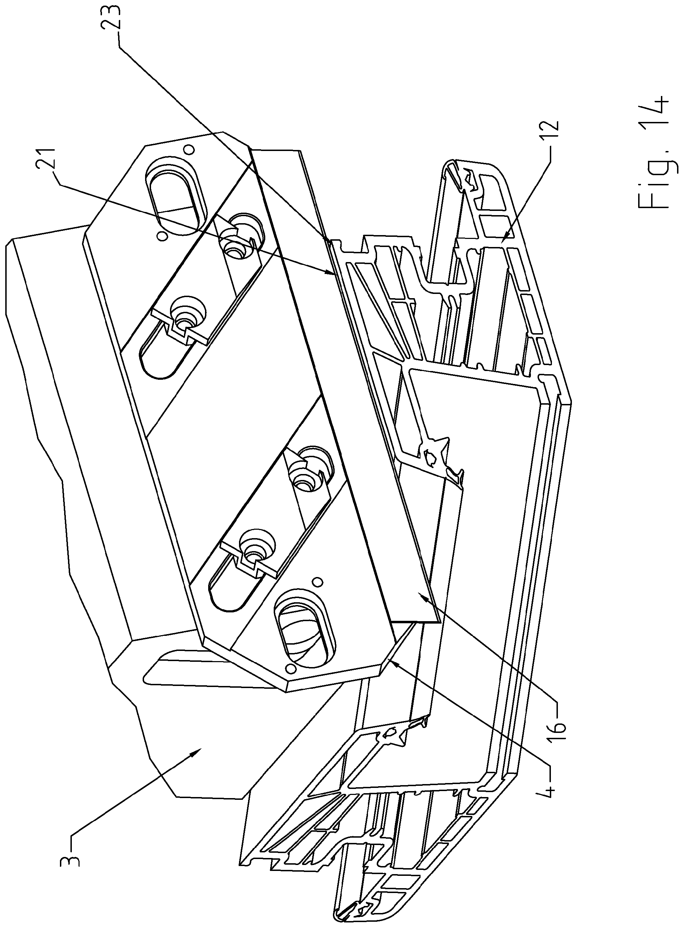

Gemäß Fig. 8 und Fig. 14 befindet sich das Trennwerkzeug 16 und das Formteil 4 in der Ruheposition und wird von dieser Position in Vorschubrichtung in die Arbeitsposition bewegt.

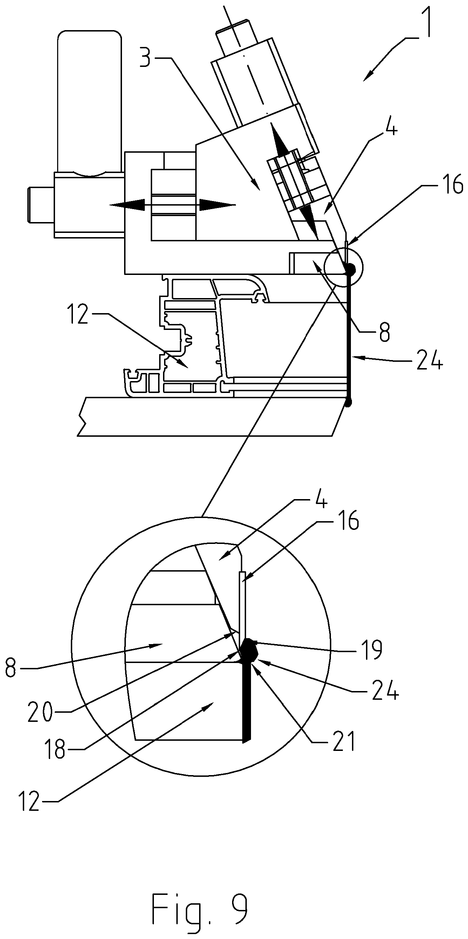

Fig. 9 verdeutlicht den Zustand der Vorrichtung 1 in einer Arbeitsposition. Das Trennwerkzeug 16 setzt mit der Klinge 19 auf dem Profilteil 12 auf der Schnittkante 21 auf und wird in Richtung Stirnseitenschnittkante 23, in der Zeichnung nach rechts unten, bewegt. Dabei trennt die Klinge 19 des Trennwerkzeugs 16 wenigstens einen Teil des Schmelzgutes 24 ab und verschiebt es in Vorschubrichtung über die Stirnseitenschnittkante 23 des Profilteils 12 bis es die Position gemäß Fig. 10 erreicht.

Aus Fig. 10 geht weiter hervor, dass der abgetrennte Teil des Schmelzgutes 24 durch das Trennwerkzeug 16 weiter verschoben wird. Das Formteil 4 bewegt sich dabei zur Stirnseitenschnittkante 23 und formt das noch verbleibende Schmelzgut 24 um.

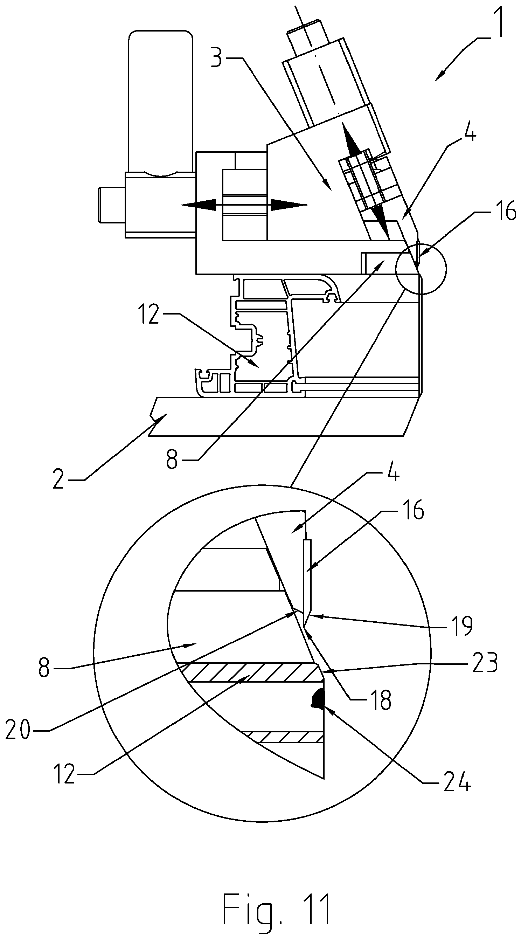

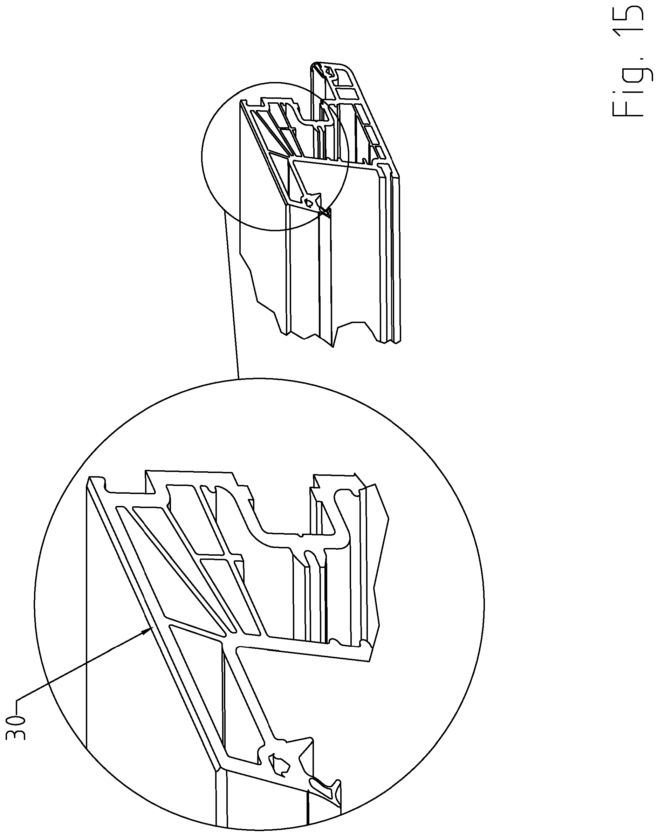

Fig. 11 zeigt die fertig geformte Stirnseitenschnittkante 23 bei wieder von der Arbeitsstellung in die Ausgangsposition zurückgekehrtem Formteil 4 und Trennwerkzeug 16. In dem hier gezeigten Ausführungsbeispiel ist das abgetrennte und verschobene Schmelzgut 24 in eine Ausnehmung des zumindest teilweise hohlen Profilteils 12 eingebracht. Die geformte Fläche 30 des fertig bearbeiteten Profilteils 12 ist in Fig. 15 dargestellt.

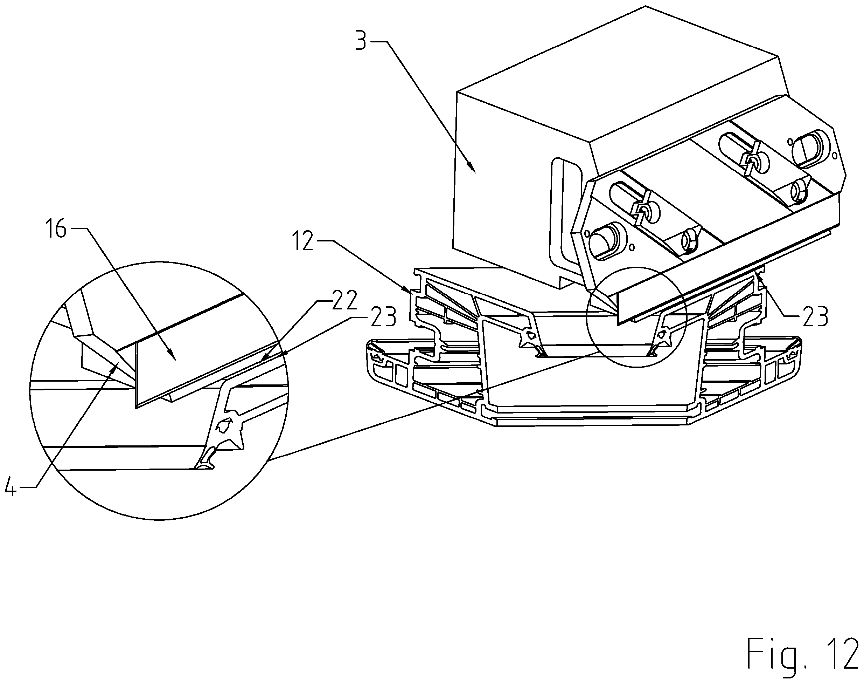

Aus Fig. 12 ist in perspektivischer Darstellung mit einer Detailansicht das Trennwerkzeug 16 und das Formteil 4 in der Ruheposition, d.h. vor Beginn des Schneide- und Umformvorgangs, dargestellt. Zu erkennen ist ebenfalls die Sichtfläche bzw. Sichtkante 22 des Profilteils 12 und die Stirnseitenschnittkante 23.

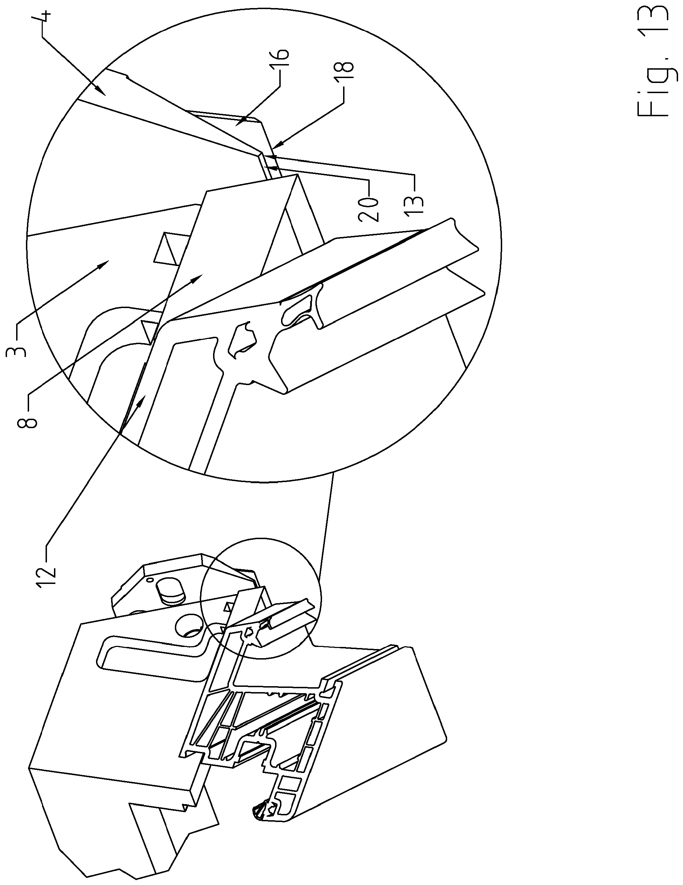

Fig. 13 zeigt einen Teil der Vorrichtung 1 in einer weiteren perspektivischen Ansicht von schräg unten nebst Detailansicht. Das Formteil 4 formt mit der an seiner Unterkante 13 angeordneten Formfläche 20 wenigstens einen Teil des Schmelzgutes 24 um. Wie erwähnt, trennt und verschiebt das Trennwerkzeug 16 mit seiner Schneidkante 18 wenigstens einen Teil des Schmelzgutes 24 bevor das Formteil 4 einen verbleibenden Rest umformt. Auch zu erkennen ist das Begrenzungsmesser 8.

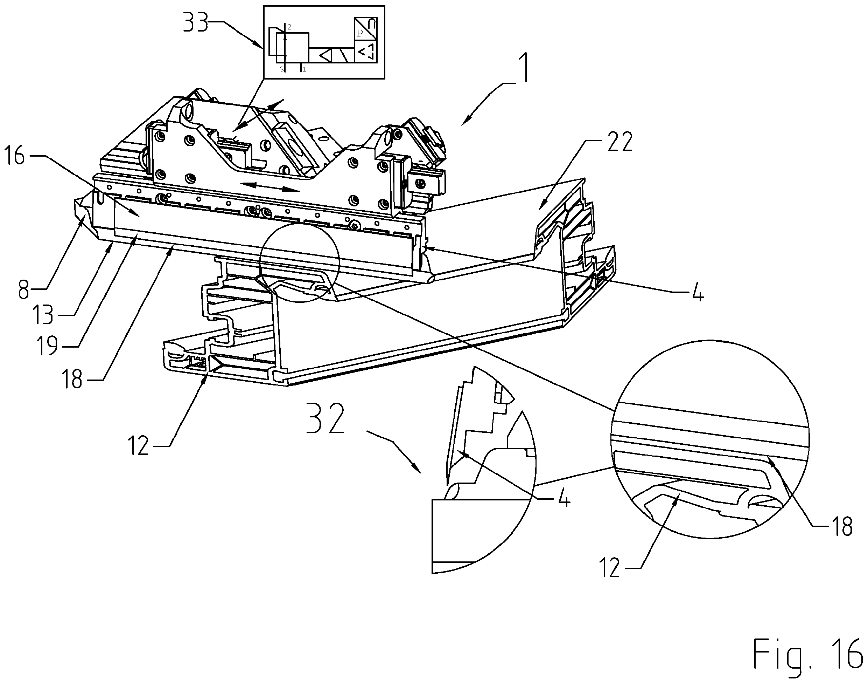

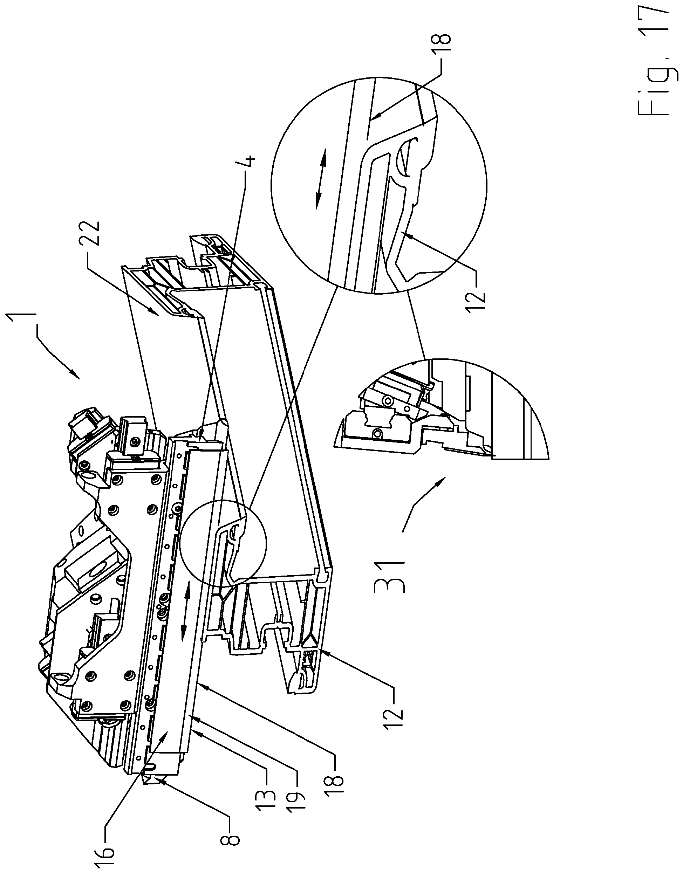

Gemäß einer Ausführungsform der Erfindung wird das Trennwerkzeug 16 des Formteils 4 mit seiner Klinge 19 während des Angleich- und Anwärmprozesses von seiner Ausgangsposition 32 in eine Trennposition 31 gebracht. Figur 16 zeigt die Klinge 19 in der Ausgangsposition 32 und Figur 17 in der Trennposition 31. Beim Angleich- und Anwärmprozess werden die Verbindungsflächen an den Profilstabenden in der Fügerichtung gegen die Heizflächen des Heizelementes gedrückt, wobei Material an der Verbindungsfläche, d.h. im Schweißbereich geschmolzen wird. Die Trennposition 31 kann zwischen 0,2 mm und 0,7 mm, vorzugsweise ca. 0,5 mm innerhalb der Oberfläche des Profilteils 12 liegen, wie aus Figur 17 hervorgeht.

Die Klinge 19 ist demnach in diesem Verfahrensschritt bereits in das Profilteil 12 eingedrungen. Anschließend kann das Trennwerkzeug 16 des Formteils 4 mit seiner Klinge 19 horizontal in Bezug auf die Oberfläche des Profilteils 12 nach Art einer Schneidbewegung eines Messer, beispielsweise eines Brotmessers, hin und her bewegt werden, um eine das Profilteil 12 umgebende Dekor-/Schutzfolie zu durchtrennen, wie Figur 17 zeigt.

Es ist auch denkbar, dass die Klinge 19 nach Abschluss der Durchtrennung der Dekor-/Schutzfolie in eine vorgegebene Position verbracht wird. Das Durchtrennen der Dekor-/Schutzfolie wird im vorliegenden Ausführungsbeispiel spätestens vor Beendigung der sogenannten Nachwärmzeit beendet, so dass das Trennwerkzeug 16 des Formteils 4 mit Klinge 19 von der Trennposition 31 in seine Ausgangsposition 32 zurück bewegt wird, wie aus Figuren 16 und 17 hervorgeht. Unter der Nachwärmzeit versteht man die nötige Tiefenwärme, um das Material in einen optimalen Fügeprozess zu bringen.

Wie erwähnt, dringt die Klinge 19 mit ihrer Schneidkante 18 in der Trennposition 31 zunächst in das Profilteil 12 ein. Die für diese Eindringbewegung notwendige Kraft kann hydraulisch, pneumatisch oder elektrisch, insbesondere mittels eines sogenannten Proportionalventils 33 auf das Trennwerkzeug 16 des Formteils 4 mit seiner Klinge 19 ausgeübt werden. Proportionalventile sind elektromagnetische oder mediumgesteuerte Ventile, die beliebige Zwischenstellungen zwischen offener und geschlossener Stellung annehmen können. Im vorliegenden Ausführungsbeispiel kann der Druck der Klinge 19 auf das Profilteil 12 etwa 1-2 bar betragen.

Anstatt einer direkten hydraulischen, pneumatischen oder elektrischen Umsetzung kann alternativ oder zusätzlich auch eine mechanische Kopplung der Klinge 19 auf die Oberfläche des Profilteils 12 realisiert werden.

Im Rahmen der Erfindung könnte es auch vorgesehen sein, dass das Durchtrennen der Dekor-/Schutzfolie auch während des oben beschriebenen Abtrennens und Umformens des Schmelzgutes 24 durchgeführt wird. Der Verfahrensschritt des Durchtrennens ist nicht darauf beschränkt, ausschließlich während der Aufwärmphase ausgeführt zu werden.

Aus Fig. 14 geht ebenfalls eine weitere perspektivische Darstellung eines Teils der Vorrichtung 1 mit einer entsprechenden Detailansicht hervor, in welcher das Formteil 4 und das Trennwerkzeug 16 gezeigt ist, welches auf das Profilteil 12 unter Bildung der Schnittkante 21 auf dem Profilteil 12 einwirkt. Es kann vorgesehen sein, dass das Trennwerkzeug 16 eine das Profilteil 12 umgebende Dekor-/Schutzfolie einschneidet und ebenfalls verschiebt, wie bereits ausgeführt wurde.

Die vorliegende Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei anders gearteten Ausführungen Gebrauch machen. Beispielsweise können zwei Bearbeitungswerkzeuge 3 Verwendung finden, wobei die Bearbeitungswerkzeuge 3 oberhalb und unterhalb der Profilträgeraufnahmen 2 angeordnet sind. Auch kann das Formteil 4 während des Fügens der Profilteile 12 als keilförmiger Stempel fungieren.

### Bezugszeichenliste

- 1: Vorrichtung
- 2: Profilträgeraufnahme
- 3: Bearbeitungswerkzeug
- 4: Formteil
- 5: Winkel α
- 6: Bereich
- 7: Unterseite
- 8: Begrenzungsmesser
- 9: Abweichung
- 10: Führungselement
- 11: Führungselement
- 12: Profilteil
- 13: Unterkante
- 15: Führungselement
- 16: Trennwerkzeug
- 17: Werkzeughalter
- 18: Schneidkante
- 19: Klinge (Trennwerkzeug)
- 20: Formfläche
- 21: Schnittkante
- 22: Sichtfläche bzw. Sichtkante
- 23: Stirnseitenschnittkante
- 24: Schmelzgut
- 30: geformte Fläche
- 31: Trennposition
- 32: Ausgangsposition
- 33: Proportionalventil

## Patentansprüche

1. Vorrichtung (1) zum Verbinden von Kunststoffprofilteilen, insbesondere zum Verschweißen von PVC-Profilstäben zu Fensterrahmen und Türrahmen, mit Profilträgern, die Profilträgeraufnahmen (2) für die Aufnahme und das Einspannen von Profilteilen (12) aufweisen, wobei wenigstens ein Profilteil (12) und eine Heizfläche eines Heizelementes der Vorrichtung (1) miteinander in Kontakt bringbar sind, um das wenigstens eine Profilteil (12) in seinem Schweißbereich vor dem Zusammenfügen mit dem anderen Profilteil anzuschmelzen, wobei ein Bearbeitungswerkzeug (3) vorgesehen ist, das zumindest ein Formwerkzeug bzw. Formteil (4) aufweist, mit dem ein Fließen und Verformen eines Schmelzgutes (24) auf einer Sichtfläche (22) des Profilteils (12) kontrollierbar ist, wobei das Formteil (4) aus einer Ruheposition in Vorschubrichtung zu einer Arbeitsposition relativ zu der Profilträgeraufnahme (2) bewegbar ist, **dadurch gekennzeichnet, dass** wenigstens ein in Vorschubrichtung dem Formteil (4) vorauseilendes Trennwerkzeug (16) zum Abtrennen und/oder Verschieben wenigstens eines Teils des Schmelzgutes (24) vorgesehen ist.

2. Vorrichtung (1) nach Anspruch 1, **dadurch gekennzeichnet, dass** das Bearbeitungswerkzeug (3) und das Trennwerkzeug (16) an einem gemeinsamen Werkzeughalter (17), vorzugsweise lösbar, gehalten sind und/oder
dass das Trennwerkzeug (16) an dem Formteil (4), vorzugsweise lösbar, gehalten ist und/oder
dass das Formteil (4) und das Trennwerkzeug (16) vertikal und/oder horizontal frei verfahrbar sind.

3. Vorrichtung (1) nach einem der Ansprüche 1 bis 2, **dadurch gekennzeichnet, dass** das Trennwerkzeug (16) als Trennmesser mit einer Schneidkante (18) ausgebildet ist.

4. Vorrichtung (1) nach Anspruch 3, **dadurch gekennzeichnet, dass** die Unterkante (13) des Formteils (4) und die Schneidkante (18) des Trennwerkzeugs (16) im Wesentlichen parallel zueinander verlaufen.

5. Vorrichtung (1) nach einem der Ansprüche 3 oder 4, **dadurch gekennzeichnet, dass** die Schneidkante (18) des Trennwerkzeugs (16) im Wesentlichen schräg bzw. diagonal in Bezug auf die Sichtfläche (22) des Profilteils (12) angeordnet ist.

6. Vorrichtung (1) nach einem der vorherigen Ansprüche, **dadurch gekennzeichnet, dass** die in Vorschubrichtung gegenüber dem Trennwerkzeug (16) nacheilende Formfläche (20) des Formteils (4) derart ausgerichtet ist, dass sie auf der Sichtfläche (22) bzw. Sichtflächenkante des Profilteils (12) an der Schnittkante (21) des Trennwerkzeugs (16) auf dem Profilteil (12) aufsitzt.

7. Vorrichtung (1) nach einem der vorherigen Ansprüche, **dadurch gekennzeichnet, dass** das Formteil (4) und/oder Trennwerkzeug (16) und die Profilträgeraufnahmen (2) einen Winkel α (5) zwischen 40° und 80°, insbesondere zwischen 45° und 75°, miteinander bilden.

8. Vorrichtung nach einem der vorherigen Ansprüche, **dadurch gekennzeichnet, dass** das Trennwerkzeug (16) und die Formfläche (20) des Formteils (4) entlang der und/oder bis vor die Stirnseitenschnittkante (23) des Profilteils (12) bewegbar sind.

9. Vorrichtung nach einem der vorherigen Ansprüche, **dadurch gekennzeichnet, dass** das Bearbeitungswerkzeug (3) ein Begrenzungsmesser (8) aufweist, das oberhalb und / oder unterhalb der Profilträgeraufnahmen (2) und parallel zu den Profilträgeraufnahmen (2) angeordnet ist, wobei das Begrenzungsmesser (8) oder ein Teil des Begrenzungsmessers (8) in Längsrichtung der Profilträgeraufnahmen (2) zwischen 0° und 2° von der Längsrichtung der Profilträgeraufnahmen (2) abweicht.

10. Vorrichtung nach einem der vorhergehenden Ansprüche, **dadurch gekennzeichnet, dass** die Klinge (19) des Trennwerkzeugs (16) in etwa horizontal in Bezug auf die Oberfläche des Profilteils (12) hin und her bewegbar angeordnet ist, insbesondere um eine das Profilteil (12) umgebende Dekor-/Schutzfolie zu durchtrennen.

11. Verfahren zum Verbinden von Kunststoffprofilteilen, insbesondere zum Verschweißen von PVC-Profilstäben zu Fensterrahmen und Türrahmen, bei dem die Profilteile (12) in Profilträgeraufnahmen (2) aufgenommen und eingespannt werden, wobei wenigstens ein Profilteil (12) und eine Heizfläche eines Heizelementes miteinander in Kontakt gebracht werden, um das wenigstens eine Profilteil (12) in seinem Schweißbereich vor einem Zusammenfügen mit dem anderen Profilteil anzuschmelzen, wobei ein Bearbeitungswerkzeug (3) vorgesehen ist, das zumindest ein Formteil (4) aufweist, mit dem ein Fließen und Verformen eines Schmelzgutes auf einer Sichtfläche (22) einer Profilteils (12) kontrolliert wird, wobei das Formteil (4) in Vorschubrichtung der Profilträgeraufnahmen (2) bewegt wird, **dadurch gekennzeichnet, dass** wenigstens ein in Vorschubrichtung dem Formteil (4) vorauseilendes Trennwerkzeug (16) zumindest einen Teil des Schmelzgutes abtrennt und/oder verschiebt.

12. Verfahren nach Anspruch 11, **dadurch gekennzeichnet, dass** das vom Trennwerkzeug (16) abgetrennte Schmelzgut in einen, vorzugsweise eine Ausnehmung aufweisenden Bereich des Profilteils (12), verschoben wird.

13. Verfahren nach einem der Ansprüche 11 oder 12, **dadurch gekennzeichnet, dass** die Unterkante (13) des Formteils (4) und die Schneidkante (18) des Trennwerkzeugs (16) im Wesentlichen parallel zueinander verfahren werden.

14. Verfahren nach einem der vorherigen Ansprüche 11 bis 13, **dadurch gekennzeichnet, dass** die Schneidkante (18) des Trennwerkzeugs (16) im Wesentlichen schräg bzw. diagonal in Bezug auf die Sichtfläche (22) des Profilteils (12) verläuft.

15. Verfahren nach einem der vorherigen Ansprüche 11 bis 14, **dadurch gekennzeichnet, dass** die in Vorschubrichtung gegenüber dem Trennwerkzeug (16) nacheilende Formfläche (20) des Formteils (4) auf der Sichtfläche (22) bzw. der Sichtflächenkante des Profilteils (12) an der Schnittkante (21) des Trennwerkzeugs (16) auf dem Profilteil (12) aufsetzt.

16. Verfahren nach einem der vorherigen Ansprüche 11 bis 15, **dadurch gekennzeichnet, dass** ein oberhalb und parallel zu den Profilträgeraufnahmen (2) bewegbares Begrenzungsmesser (8) des Bearbeitungswerkzeugs (3) oder ein Teil eines oberhalb der Profilträgeraufnahmen (2) bewegbaren und parallel zu den Profilträgeraufnahmen (2) bewegbaren Begrenzungsmessers (8) des Bearbeitungswerkzeugs (3) bei seiner Bewegung in Längsrichtung der Profilträgeraufnahmen (2) zwischen 0° und 2°, bevorzugt 1°, von der Längsrichtung der Profilträgeraufnahmen (2) abweicht.

17. Verfahren nach einem der vorherigen Ansprüche 11 bis 16, **dadurch gekennzeichnet, dass** die vertikale Bewegung des Formteils (4) und das Trennwerkzeug (16), die über die Profiloberfläche des Profilteils (2) hinausgeht, zwischen 1 mm und 10 mm, vorzugsweise zwischen 3 mm und 5 mm, eingestellt wird, wobei das Formteil (4) und das Trennwerkzeug (16) oberhalb und/oder unterhalb der Profiloberfläche angeordnet sind und die vertikale Bewegung aus der unteren und/oder oberen Position in Richtung der Profiloberfläche erfolgt.

18. Verfahren nach einem der vorherigen Ansprüche 11 bis 17, **dadurch gekennzeichnet, dass** das Formteil (4) und das Trennwerkzeug (16) vertikal und/oder horizontal frei verfahrbar ist und/oder entlang der und/oder bis vor die Stirnseitenschnittkante (23) des Profilteils (12) bewegt werden.

19. Verfahren nach einem der vorherigen Ansprüche 11 bis 18, **dadurch gekennzeichnet, dass** das Trennwerkzeug (16) mit seiner Klinge (19) von einer Ausgangsposition (32) in eine Trennposition (31) gebracht wird, in welcher die Klinge (19) in das Profilteil (12) eindringt.

20. Verfahren nach einem der vorherigen Ansprüche 11 bis 19, **dadurch gekennzeichnet, dass** das Trennwerkzeug (16) in etwa horizontal in Bezug auf die Oberfläche des Profilteils (12) hin und her bewegt wird, insbesondere um eine das Profilteil (12) umgebende Dekor-/Schutzfolie zu durchtrennen.

## Claims

1. Apparatus (1) for connecting plastic profiled parts, in particular for welding PVC profiled bars to form window frames and door frames, having profile supports which have profile-support mounts (2) or holding and clamping of profiled parts (12), wherein at least one profiled part (12) and a heating surface of a heating element of the apparatus (1) can be brought into contact with one another in order to start melting of the at least one profiled part (12) in its welding region prior to being joined together with the other profiled part, wherein a processing tool (3) is provided, said tool having at least one forming tool or forming part (4) by means of which it is possible to control flow and deformation of a melt (24) on a visible surface (22) of the profiled part (12), wherein the forming part (4) can be moved in an advancement direction from a rest position to an operating position relative to the profile-support mount (2), **characterized in that** at least one separating tool (16), which precedes the forming part (4) in the advancement direction and is intended for severing and/or displacing at least part of the melt (24), is provided.

2. Apparatus (1) according to Claim 1, **characterized in that** the processing tool (3) and the separating tool (16) are retained, preferably in a releasable manner, on a common tool holder (17), and/or
**in that** the separating tool (16) is retained, preferably in a releasable manner, on the forming part (4), and/or
**in that** the forming part (4) and the separating tool (16) are freely displaceable vertically and/or horizontally.

3. Apparatus (1) according to either of Claims 1 and 2, **characterized in that** the separating tool (16) is designed in the form of a knife with a cutting edge (18).

4. Apparatus (1) according to Claim 3, **characterized in that** the lower edge (13) of the forming part (4) and the cutting edge (18) of the separating tool (16) run essentially parallel to one another.

5. Apparatus (1) according to either of Claims 3 and 4, **characterized in that** the cutting edge (18) of the separating tool (16) is arranged essentially obliquely or diagonally in relation to the visible surface (22) of the profiled part (12).

6. Apparatus (1) according to one of the preceding claims, **characterized in that** the forming surface (20) of the forming part (4), said forming surface following the separating tool (16) in the advancement direction, is oriented such that it is seated on the visible surface (22) or visible-surface edge of the profiled part (12) at the cut edge (21) produced by the separating tool (16) on the profiled part (12).

7. Apparatus (1) according to one of the preceding claims, **characterized in that** the forming part (4) and/or separating tool (16) and the profile-support mounts (2) form an angle α (5) between 40° and 80°, in particular between 45° and 75°, with one another.

8. Apparatus according to one of the preceding claims, **characterized in that** the separating tool (16) and the forming surface (20) of the forming part (4) can be moved along, and/or to a point in front of, the end-side cut edge (23) of the profiled part (12).

9. Apparatus according to one of the preceding claims, **characterized in that** the processing tool (3) has a delimiting blade (8), which is arranged above and/or beneath the profile-support mounts (2) and parallel to the profile-support mounts (2), wherein the delimiting blade (8) or a part of the delimiting blade (8) in the longitudinal direction of the profile-support mounts (2) deviates by between 0° and 2° from the longitudinal direction of the profile-support mounts (2).

10. Apparatus according to one of the preceding claims, **characterized in that** blade (19) of the separating tool (16) is arranged for movement back and forth approximately horizontally in relation to the surface of the profiled part (12), in particular so as to sever a decorative/protective film which surrounds the profiled part (12).

11. Method for connecting plastic profiled parts, in particular for welding PVC profiled bars to form window frames and door frames, in the case of which the profiled parts (12) are held and clamped in profile-support mounts (2), wherein at least one profiled part (12) and a heating surface of a heating element are brought into contact with one another in order to start melting of the at least one profiled part (12) in its welding region prior to being jointed together with the other profiled part, wherein a processing tool (3) is provided, said processing tool having at least one forming part (4) by which to control flow and deformation of a melt on a visible surface (22) of a profiled part (12), wherein the forming part (4) is moved in an advancement direction of the profile-support mounts (2), **characterized in that** at least one separating tool (16), which precedes the forming part (4) in the advancement direction severs and/or displaces at least part of the melt.

12. Method according to Claim 11, **characterized in that** the melt, which is severed by the separating tool (16), is displaced into a preferably aperture-containing region of the profiled part (12).

13. Method according to either of Claims 11 and 12, **characterized in that** the lower edge (13) of the forming part (4) and the cutting edge (18) of the separating tool (16) run essentially parallel to one another.

14. Method according to one of the preceding Claims 11 to 13, **characterized in that** the cutting edge (18) of the separating tool (16) runs essentially obliquely or diagonally in relation to the visible surface (22) of the profiled part (12).

15. Method according to one of the preceding Claims 11 to 14, **characterized in that** the forming surface (20) of the forming part (4), said forming surface following the separating tool (16) in the advancement direction, is seated on the visible surface (22) or the visible-surface edge of the profiled part (12) at the cut edge (21) produced by the cutting tool (16) on the profiled part (12).

16. Method according to one of the preceding Claims 11 to 15, **characterized in that** a delimiting blade (8) of the processing tool (3), it being possible for said delimiting blade to be moved above and parallel to the profile-support mounts (2), or a part of a delimiting blade (8) of the processing tool (3), it being possible for said delimiting blade to be moved above the profile-support mounts (2) and parallel to the profile-support mounts (2), deviates by between 0° and 2°, preferably 1°, from the longitudinal direction of the profile-support mounts (2) as it moves in the longitudinal direction of the profile-support mounts (2).

17. Method according to one of the preceding Claims 11 to 16, **characterized in that** the vertical movement of the forming part (4) and the separating tool (16), said vertical movement extending beyond the profiled surface of the profiled part (12), is set at between 1 mm and 10 mm, preferably between 3 mm and 5 mm, wherein the forming part (4) and the separating tool (16) are arranged above and/or beneath the profiled surface and the vertical movement takes place from the lower and/or upper position in the direction of the profiled surface.

18. Method according to one of the preceding Claims 11 to 17, **characterized in that** the forming part (4) and the separating tool (16) are freely displaceable vertically and/or horizontally and/or are moved along, and/or to a point in front of, the end-side cut edge (23) of the profiled part (12).

19. Method according to one of the preceding Claims 11 to 18, **characterized in that** the blade (19) of the separating tool (16) is moved from a starting position (32) into a cutting position (31), in which the blade (19) penetrates into the profiled part (12) .

20. Method according to one of the preceding Claims 11 to 19, **characterized in that** the separating tool (16) is moved back and forth approximately horizontally in relation to the surface of the profiled part (12), in particular so as to sever a decorative/protective film which surrounds the profiled part (12).

## Revendications

1. Dispositif (1) destiné à relier des pièces profilées en plastique, en particulier à souder des barres profilées en PVC pour former des cadres de fenêtres et des cadres de porte, comprenant des supports profilés qui présentent des logements de supports profilés (2) pour recevoir et serrer des pièces profilées (12), au moins une pièce profilée (12) et une surface de chauffage d'un élément chauffant du dispositif (1) pouvant être mis en contact l'un avec l'autre afin de faire fondre l'au moins une pièce profilée (12) dans sa zone de soudage avant l'assemblage avec l'autre pièce profilée, un outil de traitement (3) étant prévu, lequel présente au moins un outil de formage ou une pièce de formage (4) avec lequel ou laquelle un écoulement et une déformation d'une matière de fusion (24) sur une surface visible (22) de la pièce profilée (12) peuvent être contrôlés, la pièce de formage (4) pouvant être déplacée d'une position de repos dans une direction d'avance jusqu'à une position de travail par rapport au logement de support profilé (2), **caractérisé en ce qu'**au moins un outil de séparation (16), en avant de la pièce de formage (4) dans la direction d'avance, est prévu pour séparer et/ou déplacer au moins une partie de la matière de fusion (24).

2. Dispositif (1) selon la revendication 1, **caractérisé en ce que** l'outil de traitement (3) et l'outil de séparation (16) sont retenus, de préférence de manière amovible, sur un porte-outil commun (17) et/ou
**en ce que** l'outil de séparation (16) est retenu, de préférence de manière amovible, sur la pièce de formage (4) et/ou
**en ce que** la pièce de formage (4) et l'outil de séparation (16) peuvent être déplacés librement verticalement et/ou horizontalement.

3. Dispositif (1) selon l'une quelconque des revendications 1 et 2, **caractérisé en ce que** l'outil de séparation (16) est réalisé sous forme de couteau de coupe avec une arête de coupe (18).

4. Dispositif (1) selon la revendication 3, **caractérisé en ce que** l'arête inférieure (13) de la pièce de formage (4) et l'arête de coupe (18) de l'outil de séparation (16) s'étendent sensiblement parallèlement l'une à l'autre.

5. Dispositif (1) selon l'une quelconque des revendications 3 et 4, **caractérisé en ce que** l'arête de coupe (18) de l'outil de séparation (16) est disposée essentiellement obliquement ou en diagonale par rapport à la surface visible (22) de la pièce profilée (12).

6. Dispositif (1) selon l'une quelconque des revendications précédentes, **caractérisé en ce que** la surface de formage (20) de la pièce de formage (4), en arrière par rapport à l'outil de séparation (16) dans la direction d'avance, est orientée de telle sorte qu'elle repose sur la surface visible (22) ou sur l'arête de la surface visible de la pièce profilée (12) contre l'arête de coupe (21) de l'outil de séparation (16) sur la pièce profilée (12).

7. Dispositif (1) selon l'une quelconque des revendications précédentes, **caractérisé en ce que** la pièce de formage (4) et/ou l'outil de séparation (16) et les logements de supports profilés (2) forment ensemble un angle α (5) compris entre 40° et 80°, en particulier compris entre 45° et 75°.

8. Dispositif selon l'une quelconque des revendications précédentes, **caractérisé en ce que** l'outil de séparation (16) et la surface de formage (20) de la pièce de formage (4) peuvent être déplacés le long de et/ou jusqu'à l'arête de coupe côté frontal (23) de la pièce profilée (12).

9. Dispositif selon l'une quelconque des revendications précédentes, **caractérisé en ce que** l'outil de traitement (3) présente un couteau de limitation (8) qui est disposé au-dessus et/ou en dessous des logements de supports profilés (2) et parallèlement aux logements de supports profilés (2), le couteau de limitation (8) ou une partie du couteau de limitation (8), dans la direction longitudinale des logements de supports profilés (2), s'écartant d'entre 0° et 2° de la direction longitudinale des logements de supports profilés (2) .

10. Dispositif selon l'une quelconque des revendications précédentes, **caractérisé en ce que** la lame (19) de l'outil de séparation (16) est disposée de manière à pouvoir être déplacée en va et vient approximativement horizontalement par rapport à la surface de la pièce profilée (12), en particulier de manière à sectionner une feuille décorative/de protection entourant la pièce profilée (12) .

11. Procédé destiné à relier des pièces profilées en plastique, en particulier à souder des barres profilées en PVC pour former des cadres de fenêtres et des cadres de porte, dans lequel les pièces profilées (12) sont reçues et serrées dans des logements de supports profilés (2), au moins une pièce profilée (12) et une surface de chauffage d'un élément chauffant étant mise en contact l'une avec l'autre afin de faire fondre l'au moins une pièce profilée (12) dans sa zone de soudage avant l'assemblage avec l'autre pièce profilée, un outil de traitement (3) étant prévu, lequel présente au moins une pièce de formage (4) avec laquelle un écoulement et une déformation d'une matière de fusion sur une surface visible (22) d'une pièce profilée (12) peuvent être contrôlés, la pièce profilée (4) étant déplacée dans la direction d'avance des logements de supports profilés (2), **caractérisé en ce qu'**au moins un outil de séparation (16), en avant de la pièce de formage (4) dans la direction d'avance, sépare et/ou déplace au moins une partie de la matière de fusion.

12. Procédé selon la revendication 11, **caractérisé en ce que** la matière de fusion séparée de l'outil de séparation (16) est déplacée dans une région de la pièce profilée (12) présentant de préférence un évidement.

13. Procédé selon l'une quelconque des revendications 11 à 12, **caractérisé en ce que** l'arête inférieure (13) de la pièce de formage (4) et l'arête de coupe (18) de l'outil de séparation (16) sont déplacées sensiblement parallèlement l'une à l'autre.

14. Procédé selon l'une quelconque des revendications précédentes 11 à 13, **caractérisé en ce que** l'arête de coupe (18) de l'outil de séparation (16) s'étend sensiblement obliquement ou en diagonale par rapport à la surface visible (22) de la pièce profilée (12).

15. Procédé selon l'une quelconque des revendications précédentes 11 à 14, **caractérisé en ce que** la surface de formage (20) de la pièce profilée (4), en arrière par rapport à l'outil de séparation (16) dans la direction d'avance, repose sur la surface visible (22) ou sur l'arête de la surface visible de la pièce profilée (12) contre l'arête de coupe (21) de l'outil de séparation (16) sur la pièce profilée (12).

16. Procédé selon l'une quelconque des revendications précédentes 11 à 15, **caractérisé en ce qu'**un couteau de limitation (8) de l'outil de traitement (3), déplaçable au-dessus des, et parallèlement aux, logements de supports profilés (2), ou une partie d'un couteau de limitation (8) de l'outil de traitement (3), déplaçable au-dessus des logements de supports profilés (2) et parallèlement aux logements de supports profilés (2), lors de son déplacement dans la direction longitudinale des logements de supports profilés (2), s'écarte d'entre 0° et 2°, de préférence de 1°, de la direction longitudinale des logements de supports profilés (2).

17. Procédé selon l'une quelconque des revendications précédentes 11 à 16, **caractérisé en ce que** le déplacement vertical de la pièce de formage (4) et l'outil de séparation (16), qui s'étend au-delà de la surface profilée de la pièce profilée (12), est ajusté entre 1 mm et 10 mm, de préférence entre 3 mm et 5 mm, la pièce de formage (4) et l'outil de séparation (16) étant disposés au-dessus et/ou en dessous de la surface profilée et le déplacement vertical s'effectuant depuis la position inférieure et/ou supérieure dans la direction de la surface profilée.

18. Procédé selon l'une quelconque des revendications précédentes 11 à 17, **caractérisé en ce que** la pièce de formage (4) et l'outil de séparation (16) peuvent être déplacés librement verticalement et/ou horizontalement et/ou sont déplacés le long de et/ou jusqu'à l'arête de coupe côté frontal (23) de la pièce profilée (12).

19. Procédé selon l'une quelconque des revendications précédentes 11 à 18, **caractérisé en ce que** l'outil de séparation (16) est amené avec sa lame (19) d'une position de départ (32) dans une position de séparation (31) dans laquelle la lame (19) pénètre dans la pièce profilée (12).

20. Procédé selon l'une quelconque des revendications précédentes 11 à 19, **caractérisé en ce que** l'outil de séparation (16) est déplacé en va et vient approximativement horizontalement par rapport à la surface de la pièce profilée (12), en particulier de manière à séparer une feuille décorative/de protection entourant la pièce profilée (12).
